# EUROPEAN PATENT APPLICATION

(11) **EP 1 241 586 A1**
(43) Date of publication of application: **18.09.2002**
(21) Application number: 00987682.2
(22) Date of filing: 21.12.2000
(51) Int. Cl.: G06F 17/30, G06F 15/00, G06F 3/00

(54) **CONTENTS PROVIDING DEVICE AND CONTENTS USING DEVICE**

(30) Priority: 21.12.1999 JP 36311399; 21.12.1999 JP 36311499
(71) Applicant: SEIKO EPSON CORPORATION, Shinjuku-ku, Tokyo 163-0811 (JP)
(72) Inventor: Hirasawa, Michihiko, Suwa-shi, Nagano 392-8502 (JP); Takeuchi, Takeshi, Suwa-shi, Nagano 392-8502 (JP)
(74) Representative: Sturt, Clifford Mark
(86) International application number: JP0009084
(87) International publication number: WO01046859

(57) **Abstract**

Efficient browsing of contents is realized by downloading only a part of contents stored in a WWW server or a storage medium. A manual providing apparatus 2 generates a list that includes indexes of contents to download to a manual utilizing apparatus 1. Respective indexes described in this list are each set with a link to a corresponding content. Then, a folder containing this list and the contents to download is transmitted to the manual utilizing apparatus 1.

## Description

### Technical Field

The present invention relates to a technique of providing contents (such as documents and images) in the form of electronic data.

### Background Art

Various browsing systems have been proposed, treating contents, which have been usually provided as printed matter, in the form of electronic data of the HTML (Hyper Text Markup Language) format.

For example, in a browsing system utilizing a WWW (World Wide Web) server and a WWW browser, the WWW server holds each content in the HTML format and opens an HTML-format list describing respective indexes of the contents to the public. Each index described in the list is associated with link information leading to the corresponding content. The WWW browser accesses the WWW server through a network such as Internet and displays the list. When a user of the WWW browser selects an index described in that list, then the WWW browser accesses the WWW server and displays the content specified by the link information associated with the index in question.

Further, in a browsing system utilizing a storage medium such as a CD-ROM or DVD-ROM and an HTML viewer, contents and a list describing respective indexes of those contents are stored in the HTML format in the storage medium in advance. The HTML viewer accesses the storage medium through a reader such as a CD-ROM drive or DVD-ROM drive, and displays the list. When a user of the HTML viewer selects an index described in that list, the HTML viewer accesses the storage medium and displays the contents specified by the link information associated with the index in question.

A manual browsing system for a certain apparatus can be constructed when a manual of that certain apparatus is divided into chapters and each chapter of the manual is treated as the above-mentioned content in the above-described browsing system utilizing a WWW server and a WWW browser or the browsing system utilizing a storage medium and an HTML viewer. According to thus-described manual browsing system, a manufacturer or seller of the apparatus can more efficiently present the manual to each purchaser of the apparatus than the previous method in which the manual is presented in the form of printed matter to each purchaser of the apparatus.

### Disclosure of the Invention

However, the above-described browsing system utilizing a WWW server and a WWW browser and the browsing system utilizing a storage medium and an HTML viewer have the following problems.

Namely, in the browsing system utilizing a WWW server and a WWW browser, a user of the WWW browser should access the WWW server through a network such as Internet each time he browses contents, and it incurs communication costs. Further, it takes time to browse contents depending on conditions of the network.

Further, in the browsing system utilizing a storage medium and an HTML viewer, the problem of the communication costs does not exist. However, contents are stored in a portable storage medium such as a CD-ROM or DVD-ROM, and accordingly it also takes more time to browse the contents than a case in which the contents are stored in a storage unit such as a hard disk.

Here, it is possible to consider a content browsing method in which contents stored in a WWW server or a storage medium and their list are downloaded into a storage unit such as a hard disk in advance, and an HTML viewer is used to access the storage unit in order to display the list. However, when an amount of the contents stored in the WWW server or the storage medium is enormous (for example, a case in which dynamic image data is included in the contents), the storage capacity of the storage unit becomes tight.

As a countermeasure against it, it is possible to consider a method in which only a necessary part of the contents stored in the WWW server or the storage medium is downloaded into the storage unit. In that case, the indexes displayed in the downloaded list include both indexes corresponding to the downloaded contents and indexes corresponding to the contents that have not been downloaded, which is confusing to a user.

Further, contents required for a manual of a certain apparatus depend on a level of user's knowledge of that apparatus, his purpose of use of that apparatus, and the like. And, a conventional manual is prepared so that it can adapt to various levels of user's knowledge and all the purpose of use.

When such a conventional manual of a certain apparatus is downloaded in the form of electronic data in the HTML format into a storage unit such as a hard disk, a valuable storage capacity tightens owing to an unnecessary manual in the case of a skilled user having a certain level of knowledge of that apparatus (a user who does not require an explanation of elementary operations of that apparatus), or a user whose purpose of use of that apparatus is limited. Further, for example, in the case of a user who does not have much knowledge of that apparatus and is satisfied with elementary operations of that apparatus, the valuable storage capacity of the storage unit tightens owing to an unnecessary manual that he will never read. In addition, indexes described in the list for browsing the manual using the WWW browser or the HTML viewer becomes enormous, and becomes inconvenient for use by each user.

The present invention has been completed considering the above-described conditions, and an object of the invention is to provide a technique suitable for downloading and browsing only a part of contents stored in a WWW server or a storage medium. Further, another object of the present invention is to provide a technique suitable for downloading and browsing contents that correspond to a user's level or purpose from a WWW server or a storage medium.

To attain the above-described objects, a first mode of the present invention provides a content providing apparatus for providing contents in response to a request from a terminal connected through a network, comprising:
a list presentation means for presenting said terminal with a download index list describing respective indexes of a plurality of contents that said apparatus can provide;
a download instruction receiving means for receiving a download instruction that includes information of at least one index selected by a user of said terminal and included in said download index list, from said terminal;
a content obtaining means for obtaining download contents, i.e., contents corresponding to information of indexes included in said download instruction;
a browsing list generation means for generating a browsing index list describing the indexes of said download contents, with link information being set to said browsing index such that, by selecting indexes described in said list displayed, the user of said terminal can call and display download contents corresponding to said indexes; and
a content providing means for providing said download contents and said browsing index list to said terminal that has issued said download instruction.

Further, a second mode of the present invention provides a content utilizing apparatus for obtaining contents from a content database that stores a plurality of contents and a download index list describing respective indexes of said plurality of contents, comprising:
a download instruction receiving means for displaying the download index list stored in said content database, to receive a download instruction from a user, with said download instruction including at least one index of a content to be downloaded;
a content obtaining means for searching said content database for contents corresponding to information of indexes included in said download instruction, and for obtaining download contents, i.e., duplicates of said contents;
a browsing list generation means for generating a browsing index list describing the indexes of said download contents, with link information being set to said browsing index such that, by selecting indexes described in said list displayed, the user can call and display download contents corresponding to said indexes; and
a content storage means for storing said download contents and said browsing index list.

Further, a third mode of the present invention provides a content providing apparatus for providing contents to a terminal connected through a network, according to a request from said terminal, comprising:
a content database that stores a plurality of contents;
a questioning and answering means for presenting predetermined questions to said terminal and receiving answers to said questions;
a model selection means for selecting at least one model out of a plurality of predetermined models, according to the answers received by said questioning and answering means;
a list acquiring means for acquiring a list of contents corresponding to said at least one model selected by said model selection means, from a management table that describes a list of contents to be downloaded for each model of said plurality of models;
a content obtaining means for searching said content database for the contents described in said list acquired by the list acquiring means, to obtain duplicates of said contents as download contents;
a browsing list generation means for generating a browsing index list describing the indexes of said download contents, with link information being set to said browsing index such that, by selecting indexes described in said list displayed, a user of said terminal can call and display download contents corresponding to said indexes; and
a content providing means for providing said download contents and said browsing index list to said terminal.

Further, a fourth mode of the present invention provides a content utilizing apparatus for obtaining contents from a content database storing a plurality of contents, comprising:
a questioning and answering means for presenting predetermined questions to a user through a display device, and for receiving answers to said questions;
a model selection means for selecting at least one model out of a plurality of predetermined models, according to the answers received by said questioning and answering means;
a list acquiring means for acquiring a list of contents corresponding to said at least one model selected by said model selection means, from a management table that describes a list of contents to be downloaded for each model of said plurality of models;
a content obtaining means for searching said content database for the contents described in said list acquired by the list acquiring means, to obtain duplicates of said contents as download contents;
a browsing list generation means for generating a browsing index list describing the indexes of said download contents, with link information being set to said browsing index such that, by selecting indexes described in said list displayed, a user can call and display download contents corresponding to said indexes; and
a content storage means for storing said download contents and said browsing index list.

According to each of the above-described modes, a user of the terminal or the content utilizing apparatus can call and display a download content, through an index described in the browsing index list. The browsing index list describes only the indexes of the downloaded contents (download contents), and it is not confusing. Thus, the user can efficiently browse a download content, using the browsing index list.

In addition, according to the above-described third and fourth modes, contents to download to the terminal or the content utilizing apparatus are decided according to user's answers to questions presented to the mentioned user of the terminal or the content utilizing apparatus.

For example, in the case where the contents stored in the content database are manual contents for the terminal or the content utilizing apparatus, or a peripheral device of the terminal or the apparatus, the questions presented to the user includes a question about the intended purpose of the terminal, the content utilizing apparatus, or the peripheral device of the terminal or the content utilizing apparatus. Then, manual documents appropriate for the user's intended purpose specified by the answer to the question are decided as the download contents. Or, the question presented to the user includes questions about the user's level of knowledge of the terminal, the content utilizing apparatus, or the peripheral device of the terminal or the content utilizing apparatus. Then, manual documents appropriate for the user's level of knowledge, which is specified by answers to those questions are decided as the download contents.

Thus, only contents appropriate for the user's level of knowledge or intended purpose are downloaded. As a result, it is possible to avoid that unnecessary contents tighten the valuable storage capacity of a storage device such as a hard disk device.

Here, in the above-described first and third modes, when the above-mentioned terminal uses a WWW browser, then, the above-mentioned content providing apparatus can be implemented by using a WWW server. In this case, the download index list, the browsing index list, and the download contents are treated as electronic data of the HTML format. Further, when said content providing means provide the browsing index list and the download contents to the above-mentioned terminal, storing the browsing index list and the download contents in one folder (directory), then, link information set to each index described in the browsing index list can be set using a relative path, premising that link destinations exist in the same folder (directory).

Further, in the above-described second and fourth modes, when each content stored in the above-mentioned content database is of the HTML format, then, the content utilizing apparatus can be implemented by utilizing an HTML viewer. In that case, the browsing index list and the download contents are treated as electronic data of the HTML format. Further, when, for example, the content storage means stores the browsing index list and the download contents in one folder (directory), then, link information set to each index described in the browsing index list can be set using a relative path assuming that link destinations exist in the same folder (directory).

### Brief Description of Drawings

Fig. 1 is a diagram for explaining an outline of a manual browsing system to which a first embodiment of the present invention is applied;
Fig. 2 is a block diagram of the manual utilizing apparatus 1 shown in Fig. 1;
Fig. 3 is a block diagram showing the manual providing apparatus 2 shown in Fig. 1;
Fig. 4 is a diagram for explaining manual documents stored in the content database 235 shown in Fig. 3 shown in Fig. 3;
Fig. 5 is a diagram for explaining contents of the management table 238 shown in Fig. 3;
Fig. 6 is a flowchart for explaining operation of the manual providing apparatus 2 used in the first embodiment of the present invention;
Fig. 7 is a view showing an example of an initial screen displayed on a display device 17 when the manual utilizing apparatus 1 accesses the manual providing apparatus 2 to perform online browsing;
Fig. 8 is a view showing an example of a screen displayed on the display device 17 when the manual utilizing apparatus 1 accesses the manual providing apparatus 2 to perform online browsing;
Fig. 9 is a view showing an example of a screen of a download index list 237 displayed on the display device 17 of the manual utilizing apparatus 1;
Fig. 10 is a view showing an example of a screen of the download index list 237 displayed on the display device 17 of the manual utilizing apparatus 1;
Fig. 11 is a view showing a state in which a user has checked check items 237b in the screen of the download index 237 shown in Fig. 9;
Fig. 12 is a view showing a state in which a user has checked check items 237b in the screen of the download index 237 shown in Fig. 10;
Fig. 13 is a diagram for explaining an example of the download management table;
Fig. 14 is a diagram for explaining an example of the download management table;
Fig. 15 is a flowchart for explaining operation in the case where the manual utilizing apparatus 1 downloads a desired manual document, from the state that the manual utilizing apparatus 1 is accessing a WWW server 211 of the manual providing apparatus 2 and is browsing manual documents;
Fig. 16 is a flowchart for explaining operation in the case where the manual utilizing apparatus 1 accesses the manual providing apparatus 2 to download a desired manual document, from the state that the manual utilizing apparatus 1 is accessing a download folder stored in an external storage 13 and is browsing manual documents;
Fig. 17 is a view showing an example of an initial screen displayed on the display device 17 when the manual utilizing apparatus 1 accesses the download folder into which it has downloaded manual documents, to perform offline browsing;
Fig. 18 is a view showing an example of a screen displayed on the display device 17 when the manual utilizing apparatus 1 accesses the download folder into which it has downloaded manual documents, to perform offline browsing;
Fig. 19 is a view showing an example of a screen displayed on the display device 17 when the manual utilizing apparatus 1 accesses the download folder into which it has downloaded manual documents, to perform offline browsing;
Fig. 20 is a block diagram showing a manual utilizing apparatus 1' to which a second embodiment of the present invention is applied to;
Fig. 21 is a flowchart for explaining operation in the case where the manual utilizing apparatus 1' downloads a desired manual document, from the state that the manual utilizing apparatus 1' is accessing a storage medium 15' and is browsing manual documents in the second embodiment of the invention;
Fig. 22 is a flowchart for explaining operation in the case where the manual utilizing apparatus 1' accesses the storage medium 15' to download a desired manual document, from the state that the manual utilizing apparatus 1' is accessing a download folder stored in the external storage 13 and is browsing manual documents;
Fig. 23 is a block diagram showing a manual providing apparatus 2' to which a third embodiment of the present invention is applied;
Fig. 24 is a diagram showing an example of registered contents of the image data folder 239 shown in Fig. 23;
Fig. 25 is a diagram showing an example of registered contents of the management table 238' shown in Fig. 23;
Fig. 26 is a flowchart for explaining operation of the manual providing apparatus 2' shown in Fig. 23;
Fig. 27 is a view showing an example of questions presented by the manual providing apparatus 2' shown in Fig. 23 to a user of the manual utilizing apparatus 1;
Fig. 28 is a view showing an example of a question presented by the manual providing apparatus 2' shown in Fig. 23 to the user of the manual utilizing apparatus 1;
Fig. 29 is a view showing an example of a question presented by the manual providing apparatus 2' shown in Fig. 23 to the user of the manual utilizing apparatus 1;
Fig. 30 is a flowchart for explaining operation in the case where the manual utilizing apparatus 1 used in the third embodiment of the invention downloads a manual from the manual providing apparatus 2';
Fig. 31 is a view showing an example of a screen displayed on the display device 17 when the manual utilizing apparatus 1 used in the third embodiment of the invention accesses a download folder into which it has downloaded manual documents, to perform offline browsing;
Fig. 32 is a block diagram of a manual utilizing apparatus 1" to which a fourth embodiment of the present invention is applied; and
Fig. 33 is a flowchart for explaining operation of the manual utilizing apparatus 1" shown in Fig. 32.

### Best Mode for Carrying Out the Invention

In the following, embodiments of the present invention will be described.

To begin with, a first embodiment of the present invention will be described.

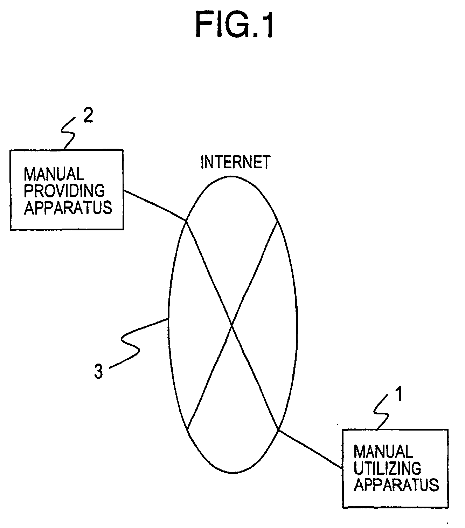

Fig. 1 is a diagram for explaining an outline of a manual browsing system to which the first embodiment of the present invention is applied.

As shown in the figure, the manual browsing system of the present embodiment comprises a manual utilizing apparatus 1 and a manual providing apparatus 2 connected with each other through Internet 3. Here, although one apparatus is shown for each of the manual utilizing apparatus 1 and the manual providing apparatus 2, a plurality of apparatuses may be provided, of course.

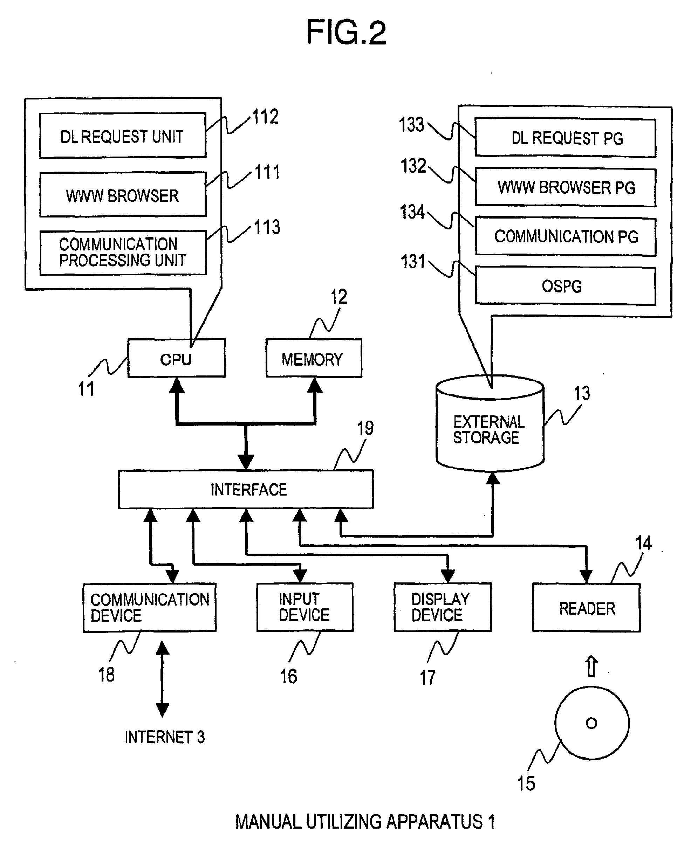

Fig. 2 is a block diagram of the manual utilizing apparatus 1 shown in Fig. 1.

As shown in the figure, the manual utilizing apparatus 1 can be implemented in an electronic computer of an ordinary configuration comprising a CPU 11, a memory 12, an external storage 13 such as a hard disk device, a reader 14 for reading data from a portable storage medium 15 such as a CD-ROM or DVD-ROM, an input device 16 such as a keyboard or a mouse, a display device 17 such as a CRT or LCD, a communication unit 18 for communicating with the manual providing apparatus 2 through Internet 3, and an interface 19 taking charge of transmission and reception of data between the above-mentioned components.

The external storage 13 stores an OS program 131, which is loaded into the memory 12 at the start of the computer and executed by the CPU 11 for generally controlling operation of the computer, a WWW browser program 132, a download request program 133, and a communication program 134.

Here, the WWW browser program 132, the download request program 133 and the communication program 134 may be read by the reader 14 from the storage medium 15 to be installed into the external storage 13, or may be downloaded into the external storage 13 from Internet 3 through the communication unit 18.

The CPU 11 loads the WWW browser program 132, the download request program 133 and the communication program 134 onto the memory 12 and executes them. By this, a WWW browser 111, a download request unit 112 and a communication processing unit 113 are implemented in the computer.

The WWW browser 111 browses HTML format data opened by the manual providing apparatus 2, by using HTTP (Hyper Text Transfer Protocol), or browses HTML format data stored in the external storage 13 or the storage medium 15.

According to a user's instruction received from the input device 16 through the WWW browser 111, the download request unit 112 generates a download list presentation request containing information of the below-mentioned download management table, or a download instruction containing information of an index of a document to download, to transmit the generated request to the manual providing apparatus 2.

The communication processing unit 113 controls the communication unit 18 to process various protocols (such as PPP and TCP/IP, for example) required for the WWW browser 111 and the download request unit 112 to communicate with the manual providing apparatus 2. In addition, the communication processing unit 113 processes a protocol (such as ftp, for example) required for downloading data from the manual providing apparatus 2.

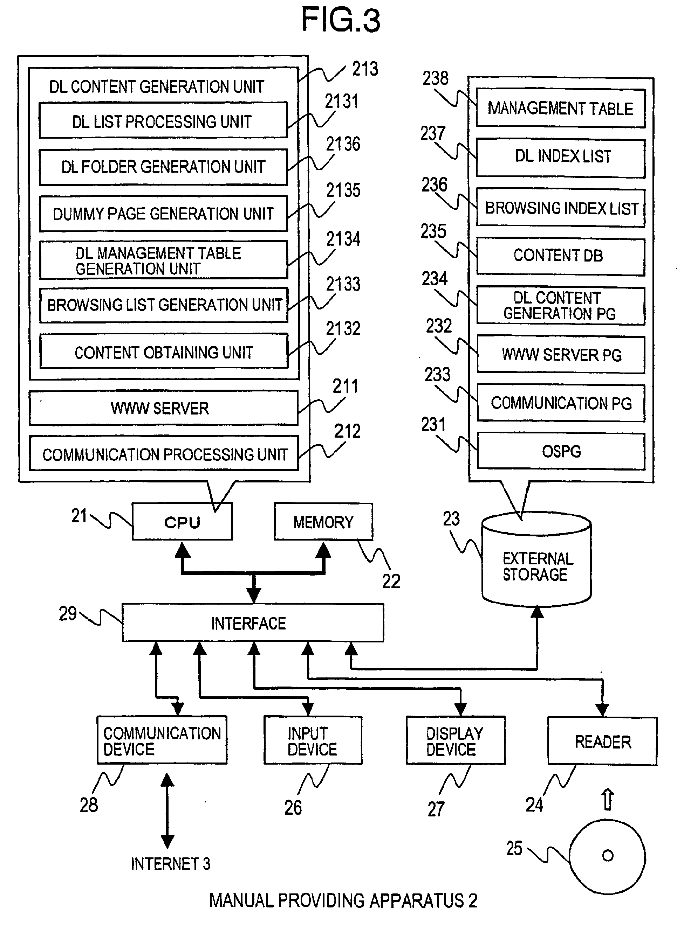

Fig. 3 is a block diagram showing the manual providing apparatus 2 shown in Fig. 1.

As shown in the figure, similarly to the manual utilizing apparatus 1, also the manual providing apparatus 2 can be implemented in an electronic computer of an ordinary configuration comprising a CPU 21, a memory 22, an external storage 23 such as a hard disk device, a reader 24 for reading data from a portable storage medium 25 such as a CD-ROM or DVD-ROM, an input device 26 such as a keyboard or a mouse, a display device 27 such as a CRT or LCD, a communication unit 28 for communicating with the manual providing apparatus 1 through Internet 3, and an interface 29 taking charge of transmission and reception of data between the above-mentioned components.

The external storage 23 stores an OS program (PG) 231, which is loaded into the memory 22 at the start of the computer and executed by the CPU 21 for generally controlling operation of the computer, a WWW server program (PG) 232, a communication program (PG) 233, a download (DL) content generation program (PG) 234, a content database (DB) 235, an original browsing index list 236, a download (DL) index list 237, and a management table 238.

Here, the WWW server program 232, the communication program 233, and the download content generation program may be read by the reader 24 from the storage medium 25 to be installed into the external storage 23, or may be downloaded into the external storage 23 from Internet 3 through the communication unit 28.

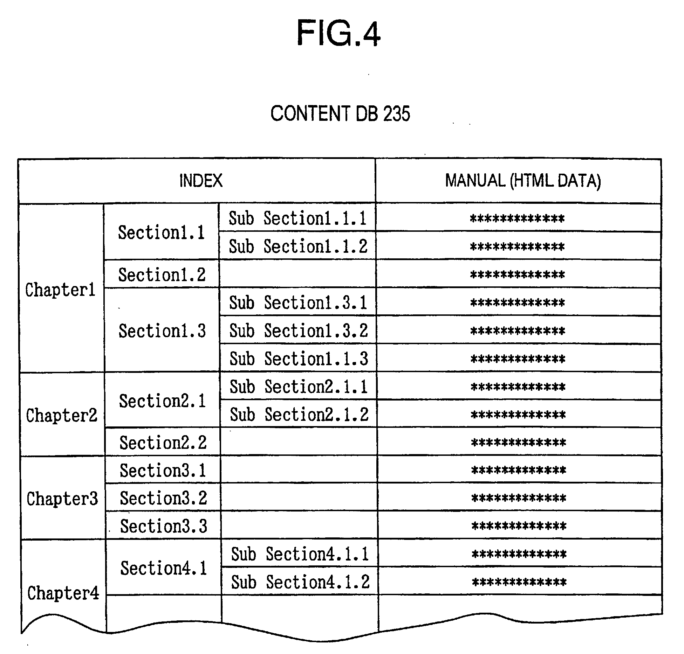

The content database 235 stores manual documents in the HTML format. Here, the manual documents are divided into subsections, as shown in Fig. 4. This subsection becomes the minimum unit for downloading the manual to the manual utilizing apparatus 1.

The original browsing index list 236 is HTML format data and describes respective indexes of the manual documents stored in the content database 235 (each document being given in subsections, as described above). Link information is set to this original browsing index list 236 such that a content corresponding to an index can be read and browsed from the content database 235 when a user selects the index in question described in the list using the WWW browser 111.

The download index list 237 is HTML format data and describes respective indexes of the manual documents stored in the content database 235. This download index list 237 provides a check item for each chapter, a check item for each section, and a check item for each subsection, such that a user of the manual utilizing apparatus 1 can check a check item using the WWW browser 111.

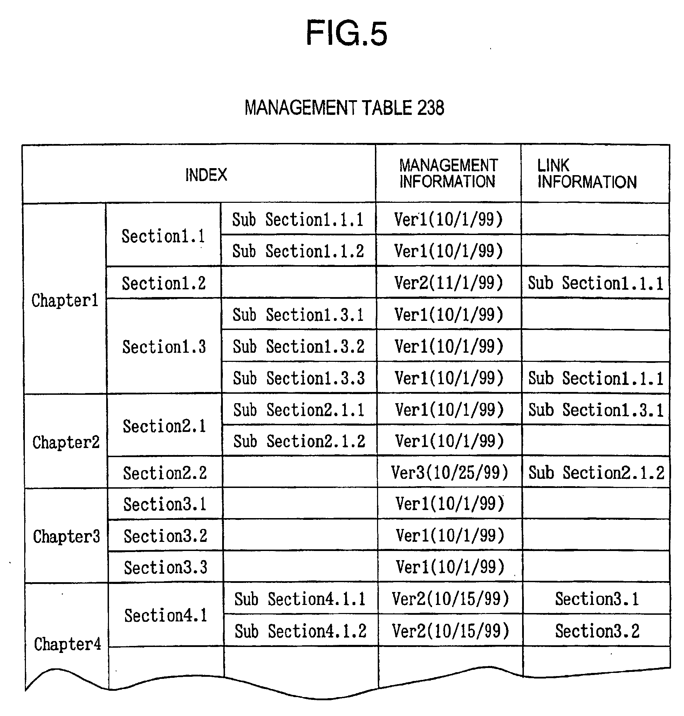

As shown in Fig. 5, for each manual document stored in the content database 235, the management table 238 describes management information such as an update date and a version and link information set to the document.

The CPU 21 loads the WWW server program 232, the communication program 233, the download content generation program 234 into the memory 22 and executes them. By this, a WWW server 211, a communication processing unit 212 and a download content generation unit 213 are implemented in the computer.

The WWW server 211 opens HTML format data to the public such that the WWW browser 111 of the manual utilizing apparatus 1 can browse it using HTTP.

The communication processing unit 212 controls the communication unit 28 to process various protocols (such as PPP and TCP/IP for example) required for the WWW server 211 and the download content generation unit 213 to communicate with the manual utilizing apparatus 1. In addition, the communication processing unit 213 processes a protocol (such as ftp, for example) required for downloading data to the manual utilizing apparatus 1.

The download content generation unit 213 comprises a download list processing unit 2131, a content obtaining unit 2132, a browsing list generation unit 2133, a download management table generation unit 2134, a dummy page generation unit 2135, and a download folder generation unit 2136.

The download list processing unit 2131 compares the below-mentioned download management table with the management table 238 shown in Fig. 5. The download management table (which describes management information such as update dates and versions of contents already downloaded by the manual utilizing apparatus 1) is contained in a download list presentation request sent from the manual utilizing apparatus 1. Then, based on the result of the comparison, the download list processing unit 2131 processes the download index list 237 into a display form in which the user of the manual utilizing apparatus 1 can identify contents that have not been downloaded. Then, the processed download index list is presented to the manual utilizing apparatus 1 through the WWW server 211.

The content obtaining unit 2132 retrieves a content selected by the user of the manual utilizing apparatus 1 from the content database 235, and makes a copy of the retrieved content. The content selected by the user is specified by the information of an index, which is included in the download instruction sent from the manual utilizing apparatus 1. Hereinafter, this copy is referred to as a download content.

The browsing list generation unit 2133 generates a browsing index list (hereinafter, referred to as' a customized browsing index list) that describes respective indexes of download contents obtained by the content obtaining unit 2132. Link information is set to this customized browsing index list such that, when the user of the manual utilizing apparatus 1 selects indexes described in the list through the WWW browser 111, the user can read and browse the download contents corresponding to the selected indexes. Here, the link information is set utilizing a relative path, on the assumption that the below-mentioned download folder generation unit 2136 stores the customized browsing index list and the download contents in one folder.

The download management table generation unit 2134 refers to the management table 238 shown in Fig. 5 to generate a management table (hereinafter, referred to as a download management table) that describes management information and link information of each download content obtained by the content obtaining unit 2132.

The dummy page generation unit 2135 refers to the download management table generated by the download management table generation unit 2134, in order to examine, for each download content, if link information is set to that download content. When link information is set, then it examines if the link destination of the link information in question is selected as another download content obtained by the content obtaining unit 2132. When it is selected, the above-mentioned link information is set such that its link destination becomes the above-mentioned another download content. On the other hand, when it is not selected, a dummy page, which describes that the content has not been downloaded, is generated in the HTML format, and the above-mentioned link information is set such that its link destination is this dummy page. The same file name is given to this dummy page as the file name of the content of the link destination, with the intention of rewriting this dummy page by the content in question when that content is downloaded later.

The download folder generation unit 2136 generates a download folder that contains the download contents obtained by the content obtaining unit 2132 (and processed by the dummy page generation unit 2135 if necessary), the customized browsing index list generated by the browsing list generation unit 2133, the download management table generated by the download management table generation unit 2134, and, if any, dummy pages generated by the dummy page generation unit 2135. This download folder is transmitted to the manual utilizing apparatus 1 through the communication processing unit 212.

Next, operation of the manual browsing system having the above-described configuration will be described.

First, operation of the manual providing apparatus 2 will be described.

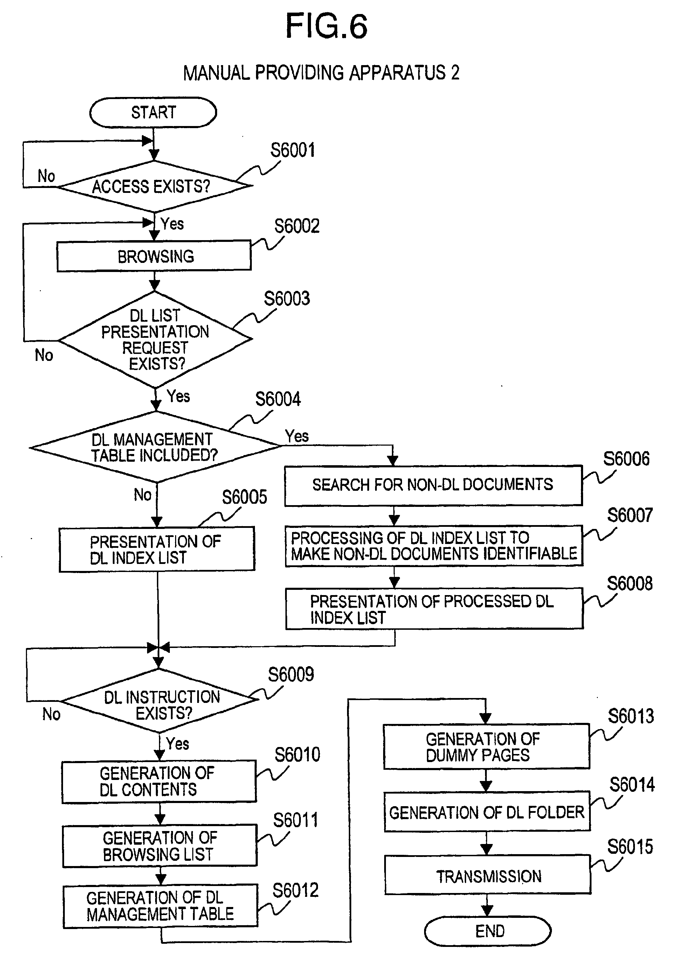

Fig. 6 is a flowchart for explaining operation of the manual providing apparatus 2 shown in Fig. 1.

When the WWW server 211 is accessed by the manual utilizing apparatus 1 through the communication processing unit 212 (Step S6001), the WWW server 211 allows the WWW browser 111 of the manual utilizing apparatus 1 to browse its contents (Step S6002).

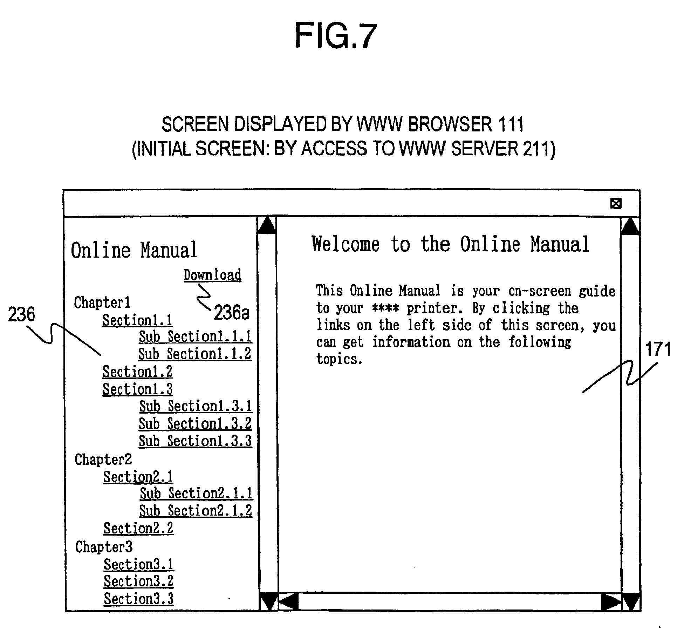

First, the WWW server 211 presents an initial screen as shown in Fig. 7 to the WWW browser 111. As shown in the figure, this initial screen comprises two frames. One frame displays the original browsing index list 236. The other frame is a document display area 171 for displaying a manual document stored in the content database 235.

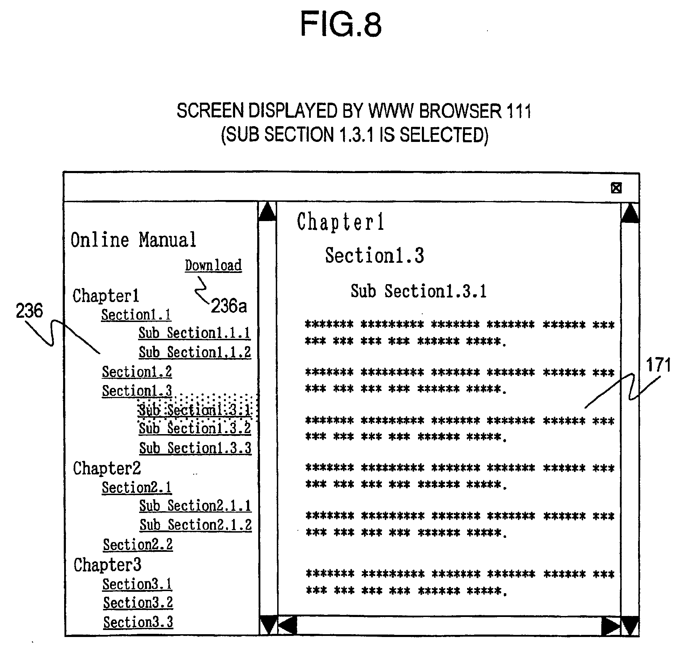

When the user of the manual utilizing apparatus 1 selects any index from the original browsing index list 236, using the input device 16, then, the WWW server 211 reads the content specified by the link information set to the selected index, from the content database 235, and presents the content to the WWW browser 111. By this, as shown in Fig. 8, the document corresponding to the above-mentioned index selected by the user is displayed in the document display area 171 of the display device 17 of the manual utilizing apparatus 1.

Thus, by selecting an index contained in the original browsing index list 236 displayed on the display device 17, the user of the manual utilizing apparatus 1 can browse online the manual document corresponding to the index.

When a download list presentation request is transmitted to the WWW server 211 from the manual utilizing apparatus 1 through the communication processing unit 212 (Step S6003), the WWW server 211 informs the download content generation unit 213 of the request. Being informed of this request, the download content generation unit 213 generates a download index to present to the manual utilizing apparatus 1 that has transmitted the request (Steps S6004 - S6008). Here, the download list presentation request is generated by the download request unit 112 when the user of the manual utilizing apparatus 1 selects an item "Download" 236a contained in the original browsing index list 236 displayed on the display device 17, using the input device 16 (see Figs. 7 and 8), and transmitted from the manual utilizing apparatus 1 to the manual providing apparatus 2.

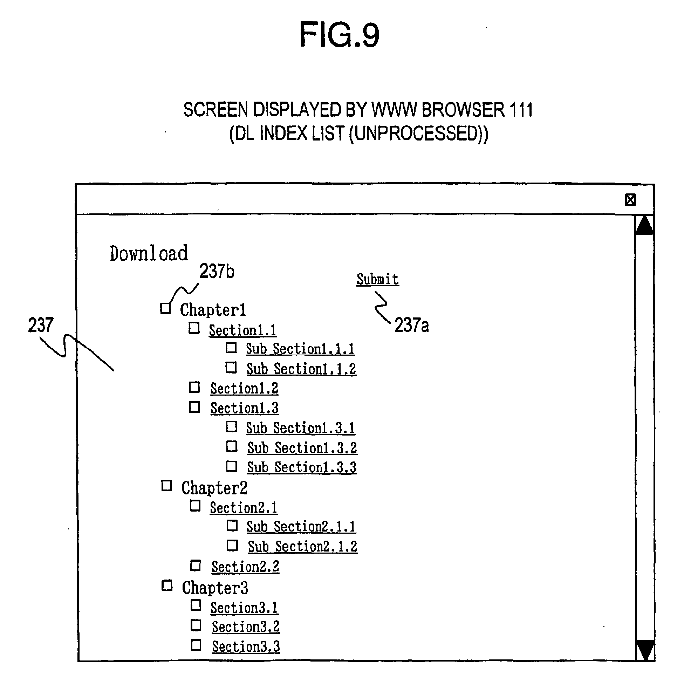

First, the download list processing unit 2131 judges if the download management table is included in the download list presentation request (Step S6004). When it is not included, the download index list 237 is read from the external storage 23 and presented to the WWW browser 111 of the manual utilizing apparatus 1 (Step S6005). By this, the download index list 237 is displayed on the display device 17 of the manual utilizing apparatus 1 as shown in Fig. 9.

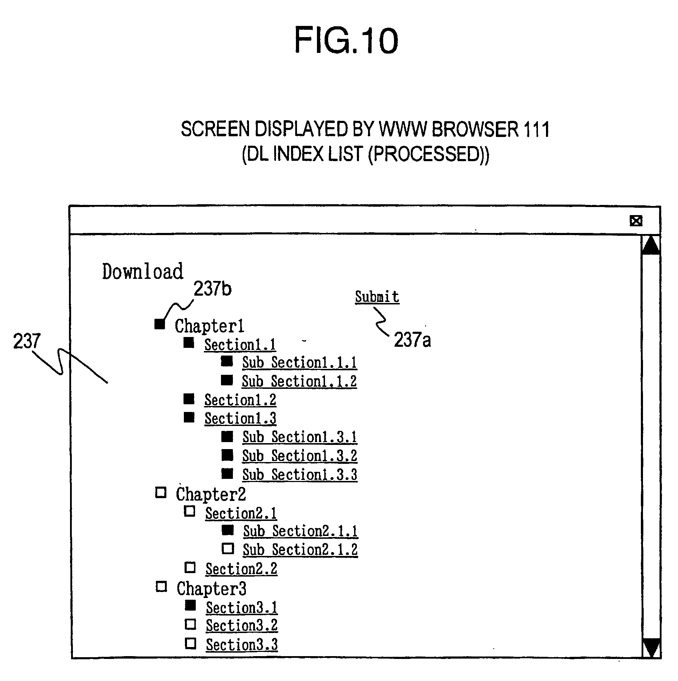

On the other hand, when the download management table is included in the download list presentation request, the download list processing unit 2131 compares this download management table with the management table 238 shown in Fig. 5. And, the download list processing unit 2131 looks for manual documents that are not described in the download management table, i.e., manual documents that have not been downloaded into the manual utilizing apparatus 1 yet (Step S6006). Here, if a same document of a new version or a new update date exists, that document also is treated as a document that has not been downloaded yet. Then, the download list processing unit 2131 reads the download index list 237 from the external storage 23, and processes this list such that it is possible to check only the check items of the manual documents that have not been downloaded into the manual utilizing apparatus 1 (Step S6007), and presents the processed list to the WWW browser 111 of the manual utilizing apparatus 1 (Step S6008). Thus, as shown in Fig. 10, the download index list 237 is displayed on the display device 17 of the manual utilizing apparatus 1, in a display form in which the already-downloaded documents can be identified. The example shown in Fig. 10 indicates that Chapter 1, Sub Section 2.1.1 and Section 3.1 have been already downloaded.

Next, when a download instruction is sent to the WWW server 211 from the manual utilizing apparatus 1 through the communication processing unit 212 (Step S6009), then the WWW server 211 informs the download content generation unit 213 of the instruction. Being informed of this instruction, the download content generation unit 213 generates a download folder including the manual document to be transmitted to the manual utilizing apparatus 1 that has transmitted the instruction in question (Step S6010 - S6014). Here, the download instruction is generated by the download request unit 112 when the user of the manual utilizing apparatus 1 checks any check item 237b included in the download index list 237 displayed on the display device 17, using the input device 16, and selects an item "Submit" 237a (see Figs. 9 and 10). Then, the generated download instruction is transmitted from the manual utilizing apparatus 1 to the manual providing apparatus 2.

First, the content obtaining unit 2132 searches the content database 235 for the contents corresponding to the index information (the indexes for which the user of the manual utilizing apparatus 1 checks their check items 237b) included in the download instruction, and generates the download contents as the respective copies of the retrieved contents (Step S6010).

Next, the browsing list generation unit 2133 generates a customized browsing index list (Step S6011).

In detail, in the case where it is judged in Step S6004 that the download list presentation request does not include the download management table, the browsing list generation unit 2133 deletes information of indexes of contents other than the download contents obtained by the content obtaining unit 2132, from the original browsing index list 237. Then, the link destinations of the remained indexes are respectively set to the download contents, i.e., the copies of the contents indicated by the indexes in question. This generates a customized browsing index list that describes the indexes of the download contents.

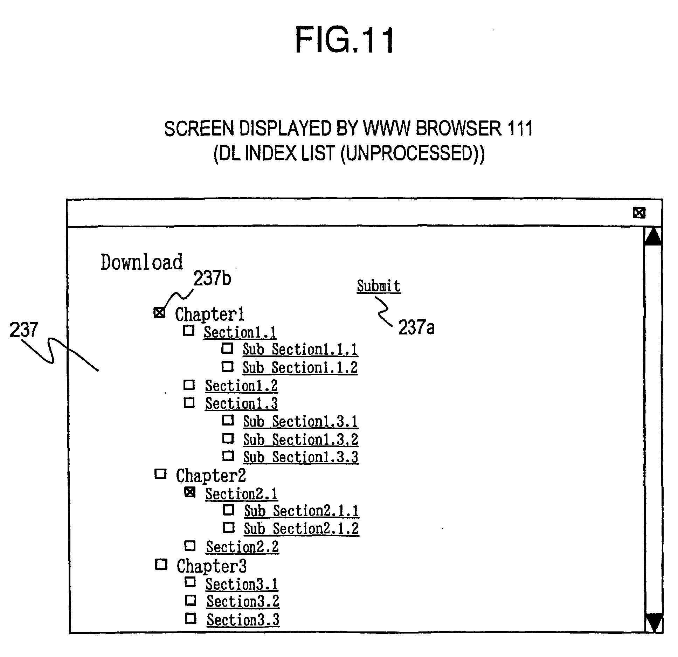

Taking the case of Fig. 9 as an example, when a download instruction is given by checking the check items 237b of Chapter 1 and Section 2.1 as shown in Fig. 11, then, the browsing list generation unit 2133 deletes indexes other than Chapter 1 (and its lower indexes) and Section 2.1 (and its upper and lower indexes) from the browsing index list 236 shown in Figs. 7 and 8. Then, respective link destinations of the subsections of Chapter 1 and subsections of Section 2.1 are set to the download contents as the copies of the corresponding documents.

On the other hand, in the case where it is judged in Step S6004 that the download list presentation request includes the download management table, the browsing list generation unit 2133 deletes information of the indexes other than the indexes of the download contents obtained by the content obtaining unit 2132 and the indexes described in the download management table, from the original browsing index list 237. Then, the link destinations of the remained indexes are set to the respective download contents, i.e., the copies of the contents indicated by the indexes in question. This generates a customized browsing index list that describes the indexes of the download contents obtained by the content obtaining unit 2132 and the indexes in the download management table.

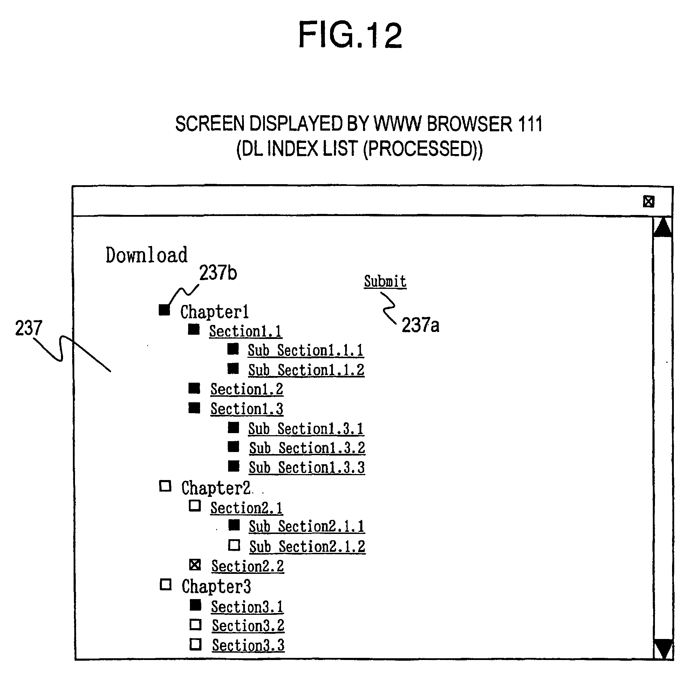

Taking the case of Fig. 10 as an example, when a download instruction is given by checking the check item 237b of Section 2.2 as shown in Fig. 12, then, the browsing list generation unit 2133 deletes indexes other than Section 2.2 (and its upper index) and the indexes (Chapter 1, Sub Section 2.1.1 and Section 3.1 and their upper and lower indexes, in the example shown in Fig. 10) described in the download management table, from the browsing index list 236 shown in Figs. 7 and 8. And, respective link destinations of the subsections of Chapter 1 and the indexes described in the download management table are set to the download contents as the copies of the corresponding documents.

Here, as described above, the customized browsing index list and the download contents are downloaded to the manual utilizing apparatus 1 being stored in one folder, and thus, link information of each index can be set using a relative path.

Next, the download management table generation unit 2134 refers to the management table 238 shown in Fig. 5, to generate a download management table (Step S6012).

In detail, in the case where it is judged in Step S6004 that the download list presentation request does not include the download management table, the download management table generation unit 2134 deletes information of indexes other than the index of the download contents obtained by the content obtaining unit 2132, from the management table 238 shown in Fig. 5, to generate a download management table.

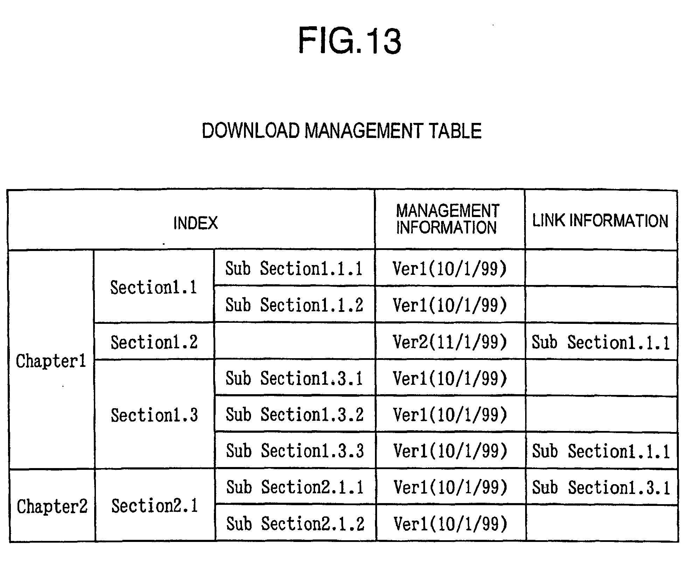

In the example of Fig. 9, when a download instruction is given by checking the check items 237b of Chapter 1 and 237b of Section 2.1 as shown in Fig. 11, then, the download management table generation unit 2134 deletes information of indexes other than Chapter 1 (and its lower indexes) and Section 2.1 (and its upper and lower indexes) from the management table 238 shown in Fig. 5. This generates a download management table as shown in Fig. 13.

On the other hand, in the case where it is judged in Step S6004 that the download list presentation request includes the download management table, then, the download management table generation unit 2134 deletes information of indexes other than the indexes of the download contents obtained by the content obtaining unit 2132 and the indexes described in the download management table included in the request in question, from the management table 238 shown in Fig. 5, to generate a download management table.

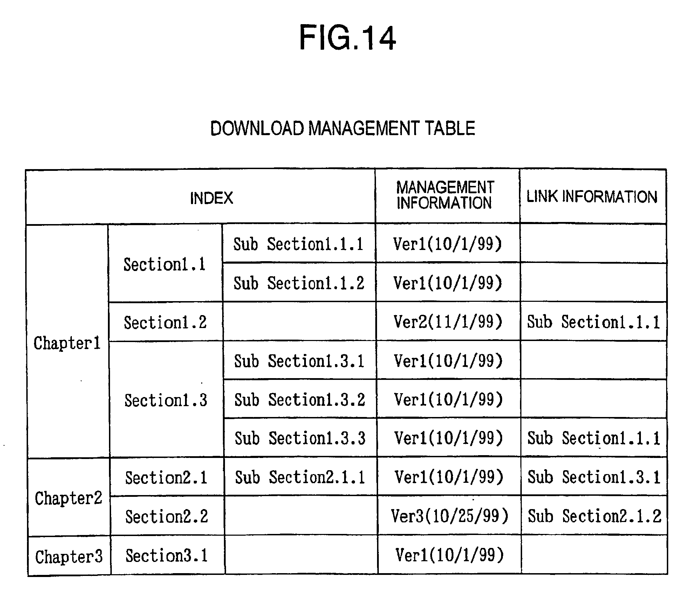

In the example of Fig. 10, when a download instruction is given by checking the check item 237b of Section 2.2 as shown in Fig. 12, then, the download management table generation unit 2134 deletes, from the management table 238 shown in Fig. 5, information of indexes other than Section 2.2 (and its upper and lower indexes) and the indexes (Chapter 1, Sub Section 2.1.1 and Section 3.1 and their upper and lower indexes, in the example shown in Fig. 10) described in the download management table included in the download list presentation request. By this, a download management table as shown in Fig. 14 is generated anew.

Next, the dummy page generation unit 2135 generates dummy pages if necessary (Step S6013).

In detail, the dummy page generation unit 2135 refers to the download management table generated by the download management table generation unit 2134, in order to search for download contents to which link information is set each. For example, in the example shown in Fig. 13, Section 1.2, Sub Section 1.3.3 and Sub Section 2.1.1 are extracted as the download contents to which link information is set each. In the example shown in Fig. 14, Section 1.2, Sub Section 1.3.3, Sub Section 2.1.1 and Section 2.2 are extracted.

Next, the dummy page generation unit 2135 examines if the link destination of the link information set to each extracted download content is selected as another download content.

For example, in the example shown in Fig. 13, Sub Section 1.1.1 and Sub Section 1.3.1 are download contents. Thus, it is judged that every link destination of the link information set to the extracted download contents is a download content. On the other hand, in the example shown in Fig. 14, Sub Section 1.1.1 and Sub Section 1.3.1 are download contents, while Sub Section 2.1.2 is not a download content. Thus, the link destinations of the link information set to the extracted download contents are judged to be download contents except for Section 2.2.

Then, when a link destination of the link information set to an extracted download content is selected as another download content, then, the dummy page generation unit 2135 defines the link information set to the extracted download content such that the link destination in question becomes the above-mentioned another download content. On the other hand, when a link destination of the link information set to an extracted download content is not selected as another download content, then, the dummy page generation unit 2135 generates a dummy page, which describes that the content has not been downloaded, in the HTML format, and defines the above-mentioned link information set to the extracted download content such that the link destination of the link information becomes this dummy page. Here, the same file name is given to this dummy page as the file name of the content of the link destination, with the intention of rewriting this dummy page by the content when the content is downloaded later.

Here, this dummy page may be set with link information leading to the original link destination of the link information set to the extracted download content, i.e., leading to the document stored in the content database 235. Or, an item "Download" may be provided in this dummy page in order that the user of the manual utilizing apparatus 1 may issue a download list presentation request from this dummy page.

When the above processing is finished, the download folder generation unit 2136 generates a download folder that contains the download contents obtained by the content obtaining unit 2132 (and processed by the dummy page generation unit 2135 if necessary), the customized browsing index list generated by the browsing list generation unit 2133, the download management table generated by the download management table generation unit 2134, and the dummy pages (if the dummy page generation unit 2135 has generated any dummy pages) (Step S6014). Then, this download folder is transmitted to the manual utilizing apparatus 1 through the communication processing unit 212 (Step S6015).

Next, operation of the manual utilizing apparatus 1 will be described.

Operation of the manual utilizing apparatus 1 is different between the case where the manual utilizing apparatus 1 downloads a desired manual document, from the state that the manual utilizing apparatus 1 is accessing the WWW server 211 of the manual providing apparatus 2 and browsing manual documents online, and the case where the manual utilizing apparatus 1 accesses the manual providing apparatus 2 to download a desired manual document, from the state that the manual utilizing apparatus 1 is accessing the download folder stored in the external storage 13 of that apparatus 1 and is browsing manual documents offline.

First, will be described the case where the manual utilizing apparatus 1 downloads a desired manual document, from the state that the manual utilizing apparatus 1 is accessing the WWW server 211 of the manual providing apparatus 2 and browsing manual documents online.

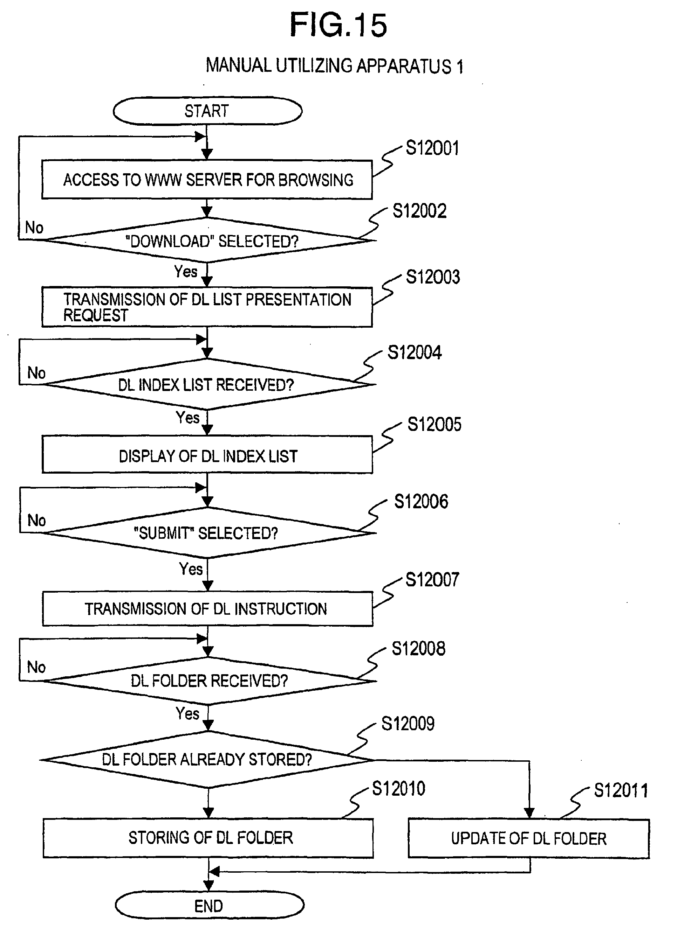

Fig. 15 is a flowchart for explaining operation in the case where the manual utilizing apparatus 1 shown in Fig. 1 downloads a desired manual document, from the state that the manual utilizing apparatus 1 is accessing the WWW server 211 of the manual providing apparatus 2 and browsing manual documents.

When the WWW browser 111 accesses the WWW server 211 of the manual providing apparatus 2 through the communication processing unit 113 according to a user's instruction inputted through the input device 16, it receives the original browsing index list 236 from the WWW server 211 and displays an initial screen as shown in Fig. 7 on the display device 17.

Here, when the user of the manual utilizing apparatus 1 selects any index from the original browsing index list 236, using the input device 16, then, the WWW browser 111 informs the WWW server 211 of the link information set to the index in question. By this, the WWW browser 111 receives data of the document corresponding to the index in question from the WWW server 211, and, as shown in Fig. 8, displays the document in the document display area 171 of the display device 17.

Thus, the user of the manual utilizing apparatus 1 selects an index included in the original browsing index list 236 displayed on the display device 17, to browse online the manual document corresponding to that index (Step S12001).

Now, when the user selects the item "Download" 236a (see Figs. 7 and 8) included in the original browsing index list 236 displayed on the display device 17, using the input device 16 (Step S12002), then, the WWW browser 111 informs the download request unit 112 to that effect. Being informed of this, the download request unit 112 generates a download list presentation request and transmits it to the manual providing apparatus 2 through the communication processing unit 113 (Step S12003). At this time, the download request unit 112 searches the external storage 13 to examine if the download folder has been already received from the manual providing apparatus 2. When the download folder has been already received, the download request unit 112 sets the information of the download management table, which is contained in the download folder, in the download list presentation request, before transmitting the download list presentation request.

Then, receiving the download index list from the manual providing apparatus 2 (Step S12004), the WWW browser 111 makes the display device 17 display the download index list (Step S12005). When the download management table is not included in the download list presentation request transmitted in Step S12003, i.e., when the manual utilizing apparatus 1 downloads a manual document from the manual providing apparatus 2 for the first time, then, the download index list 237 is displayed on the display device 17 in a display form by which the user can select all the documents provided by the manual providing apparatus 2 (all the documents stored in the content database 235), as shown in Fig. 9. On the other hand, when the download management table is included in the download list presentation request transmitted in Step S12003, i.e., when the manual utilizing apparatus 1 has already downloaded a manual document from the manual providing apparatus 2, then, the download index list 237 is displayed on the display device 17 in a display form in which the user can select only documents that have not been downloaded by the manual utilizing apparatus 1, as shown in Fig. 10.

Next, when the user checks a check item or items 237b in the download index list 237 displayed on the display device 17 and selects the item "Submit" 237a (see Figs. 9 and 10), using the input device 16 (Step S12006), then, the WWW browser 111 informs the download request unit 112 to that effect. Being informed of this, the download request unit 112 generates a download instruction including information of the indexes for which the check items 237b are checked, and transmits the download instruction to the manual providing apparatus 2 through the communication processing unit 113 (Step S12007). In the example shown in Fig. 11, a download instruction including information of Chapter 1 and Section 2.1 is transmitted. Further, in the example shown in Fig. 12, a download instruction including information of Section 2.2 is transmitted.

Then, the download request unit 112 awaits reception of the download folder from the manual providing apparatus 2 (Step S12008). Next, when the download management table is not included in the download list presentation request transmitted in Step S12003, i.e., when the manual utilizing apparatus 1 downloads a manual document from the manual providing apparatus 2 for the first time (No in Step S12009), then, the download request unit 112 stores the received download folder to the external storage 13 (Step S12010).

On the other hand, when the download management table is included in the download list presentation request transmitted in Step S12003, i.e., when the manual utilizing apparatus 1 has already downloaded a manual document from the manual providing apparatus 2 (Yes in Step S12009), then, the download request unit 112 writes the download contents, the customized browsing index list, the download management table and the dummy pages stored in the received download folder into the download folder stored in the external storage 13 (Step S12011). Thus, the customized browsing index list and the download management table of the download folder stored in the external storage 13 are updated to the customized browsing index list and the download management table stored in the newly-received download folder. Further, a manual document included in the download folder stored in the external storage 13 is updated to a new document of a new version or a new update date, if the newly-received download folder includes such a manual document. Further, a dummy page contained in the download folder stored in the external storage 13 is updated to a new document of the same file name as the dummy page, if the newly-received download folder contains such a document.

Next, there will be described the case where a desired manual document is downloaded by accessing the manual providing apparatus 2, from the state that the download folder stored in the external storage 13 of the manual utilizing apparatus 1 is accessed and manual document is browsed offline.

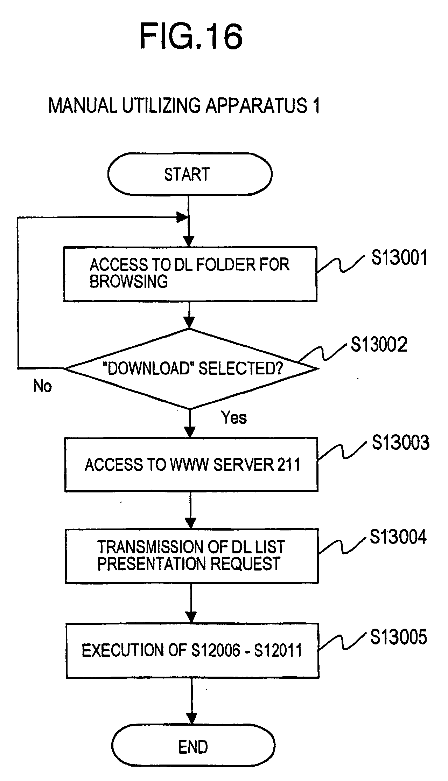

Fig. 16 is a flowchart for explaining operation in the case where the manual utilizing apparatus 1 accesses the manual providing apparatus 2 to download a desired manual document, from the state that the manual utilizing apparatus 1 is accessing the download folder stored in the external storage 13 and browsing manual documents.

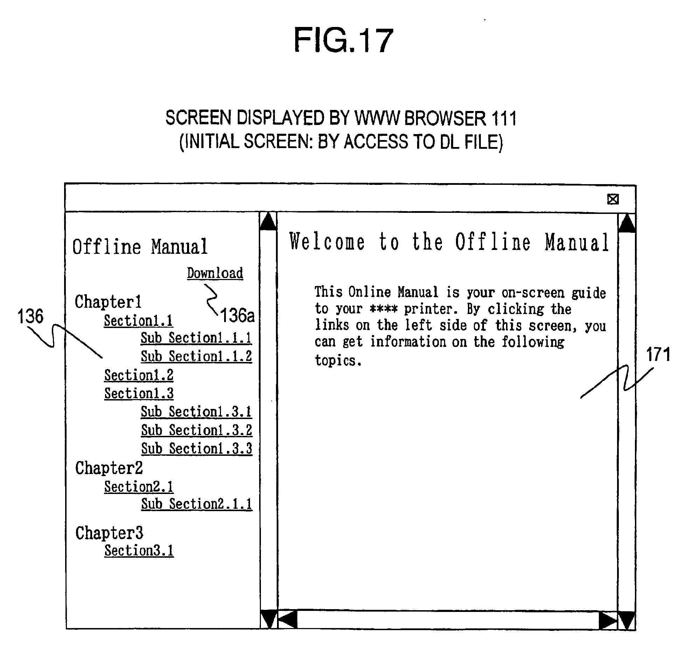

The WWW browser 111 reads the customized browsing index list from the download folder stored in the external storage 13 as described above, according to a user's instruction inputted through the input device 16, and presents an initial screen as shown in Fig. 17 to the display device 17. As shown in the figure, this initial screen comprises two frames. One frame displays the customized browsing index list 136. The other frame is the document display area 171 for displaying a manual document contained in the download folder.

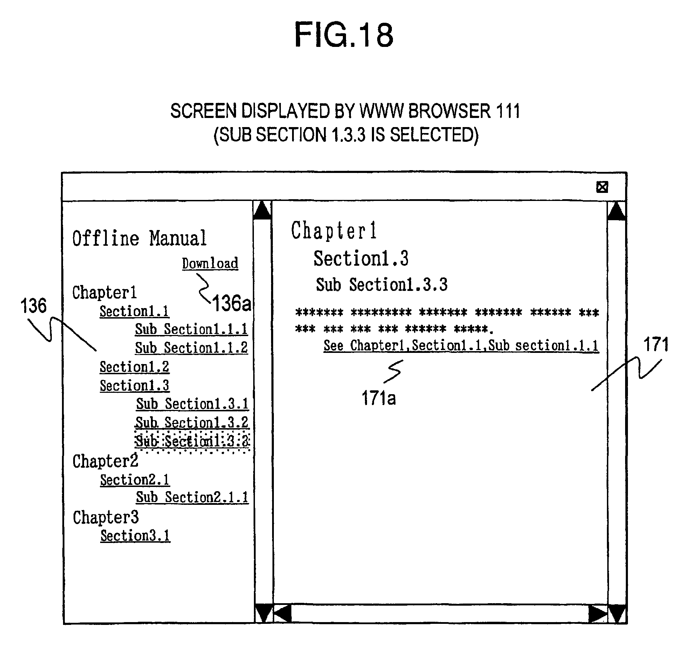

Here, when the user of the manual utilizing apparatus 1 selects any index from the customized browsing index list 136, using the input device 16, then, the WWW browser 111 reads the document corresponding to the index in question from the download folder, based on the link information set to the index, and, as shown in Fig. 18, displays the document in the document display area 171 of the display device 17.

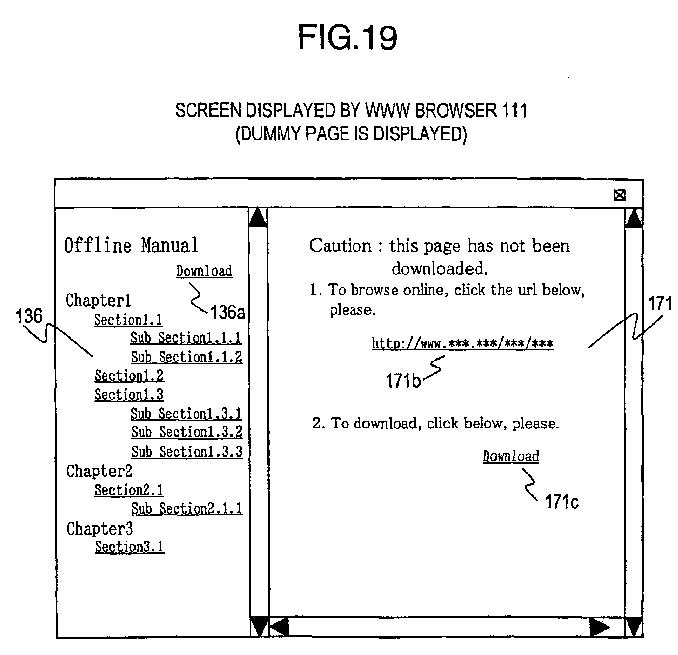

Further, as shown in Fig. 18, in the case where link information 171a to another document is set to the document displayed in the document display area 171, then, when the user of the manual utilizing apparatus 1 selects the link information 171a, using the input device 16, the WWW browser 111 reads the document of the link destination from the download folder and displays the document in the document display area 171 of the display device 17. At this time, when the document of the link destination is a dummy page, a display as shown in Fig. 19 is made.

Thus, by selecting an index included in the customized browsing index list 136 displayed on the display device 17, the user of the manual utilizing apparatus 1 can browse offline the manual document corresponding to the index in question (Step S13001).

Now, when the user selects the item "Download" 136a (see Figs. 18 and 19) in the customized browsing index list 136 displayed on the display device 17 or the item "Download" 171c in the dummy page, using the input device 16 (Step S13002), the WWW browser 111 informs the download request unit 112 to that effect. Being informed of this, the download request unit 112 accesses the manual providing apparatus 2 through the communication processing unit 113 (Step S13003). The, the download request unit 112 reads the download management table in the download folder stored in the external storage 13, generates a download list presentation request including the information of the table in question, and transmits the download list presentation request to the manual providing apparatus 2 (Step S13005). Thereafter, processing of Steps S12006 - S12011 shown in Fig. 15 is performed (Step S13005).

Hereinabove, the first embodiment of the present invention has been described.

According to the above first embodiment, the user of the manual utilizing apparatus 1 can call a manual document through its index described in the customized browsing index list, to display it. The customized browsing index list describes only indexes of the manual documents (i.e., download contents) that have been downloaded from the manual providing apparatus 2, and it is not confusing. Thus, the user of the manual utilizing apparatus 1 can efficiently browse the downloaded manual documents, using the customized browsing index list.

Next, a second embodiment of the present invention will be described.

In the above-described first embodiment, there has been described the case where the manual utilizing apparatus 1 downloads manual documents from the manual providing apparatus 2 through Internet 3. In the present invention, there will be described a case where the manual utilizing apparatus 1' downloads manual documents from a portable storage medium such as a CD-ROM or DVD-ROM to an external storage such as a hard disk.

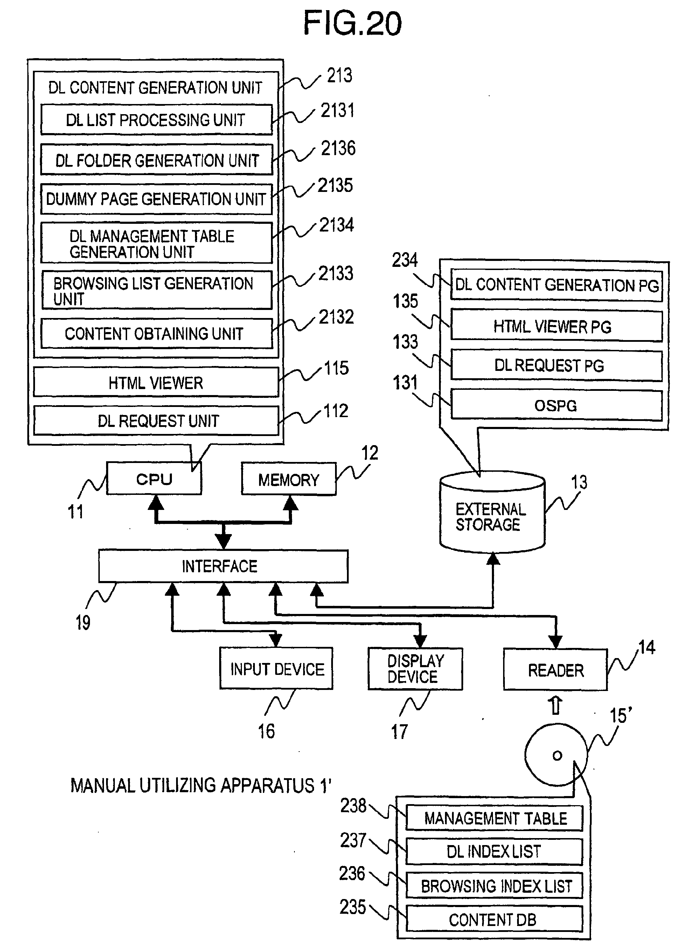

Fig. 20 is a block diagram showing a manual utilizing apparatus 1' to which the second embodiment of the present invention is applied. Here, like numerals refer to components of like functions in this figure and Figs. 2 and 3 showing the first embodiment.

As shown in the figure, the manual utilizing apparatus 1' of the present embodiment can be implemented in an electronic computer of a configuration similar to the manual utilizing apparatus 1 of the above-described first embodiment.

A storage medium 15' stores a content database 235, an original browsing index list 236, a download index list 237 and a management table 238.

An external storage 13 stores an OS program 131, an HTML viewer program 135, a download request program 133, and a download content generation program 234.

Here, the HTML viewer program 135, the download request program 133 and the download content generation program 234 may be read by a reader 14 from the storage medium 15' and downloaded to the external storage 13, or may be downloaded to the external storage 13 from Internet through a communication unit 18 that is not shown.

A CPU 11 loads the HTML viewer program 135, the download request program 133 and the download content generation program 234 onto a memory 12 and executes them. By this, an HTML viewer 115, a download request unit 112 and a download content generation unit 214 are implemented in the computer.

The HTML viewer 115 browse HTML format data stored in the external storage 12 or the storage medium 15. The download request unit 112 and the download content generation unit 214 are fundamentally similar to ones used in the apparatus of the above-mentioned first embodiment. However, in the first embodiment, the manual utilizing apparatus 1 downloads a manual document from the manual providing apparatus 2 to the external storage 12 through Internet 3. On the other hand, in the present embodiment, the manual utilizing apparatus 1' downloads a manual document from the storage medium 15' to the external storage 13, and thus, processing is slightly different.

Next, operation of the manual utilizing apparatus 1' of the present embodiment will be described.

The operation of the manual utilizing apparatus 1' is different between the case where the manual utilizing apparatus 1' downloads a desired manual document, from the state that the manual utilizing apparatus 1' is accessing the storage medium 15' and browsing manual documents, and the case where the manual utilizing apparatus 1' accesses the storage medium 15' to download a desired manual document, from the state that the manual utilizing apparatus 1' is accessing a download folder stored in the external storage 13 and browsing manual documents.

First, will be described the case where the manual utilizing apparatus 1' downloads a desired manual document, from the state that the manual utilizing apparatus 1' is accessing the storage medium 15' and browsing manual documents.

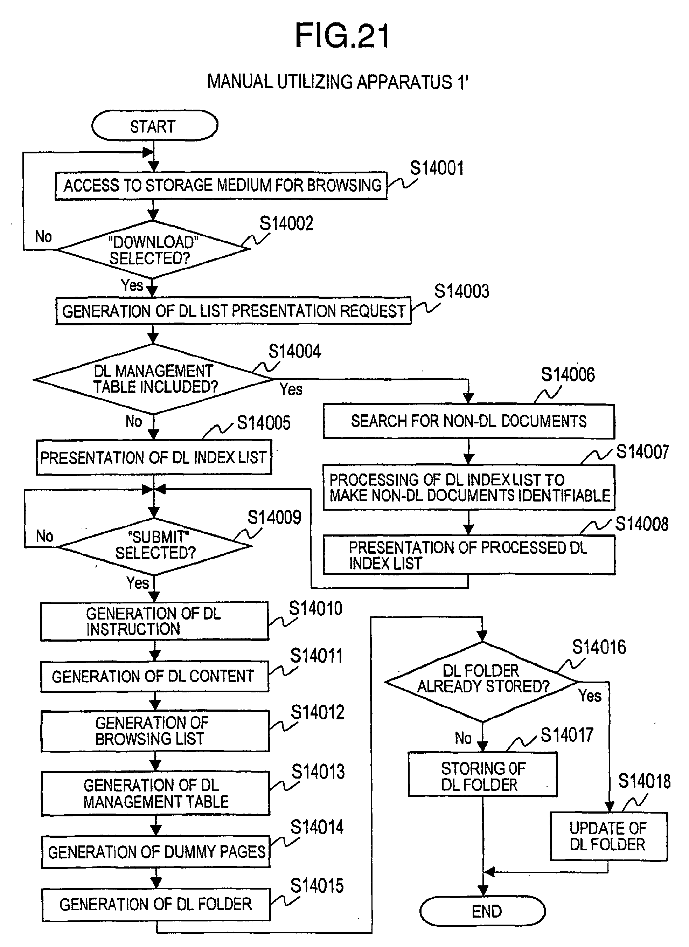

Fig. 21 is a flowchart for explaining the operation in the case where the manual utilizing apparatus 1' shown in Fig. 20 downloads a desired manual document, from the state that the manual utilizing apparatus 1' is accessing the storage medium 15' and browsing manual documents.

The THML viewer 115 accesses the storage medium 15' through the reader 14 according to a user's instruction inputted through the input device 16, reads the original browsing index list 236, and displays an initial screen as shown in Fig. 7 on the display device 17.

Here, when the user selects any index from the original browsing index list 236, using the input device 16, then, the HTML viewer 115 reads the document data corresponding to the index in question from the content database 235 on the storage medium 15', based on link information set to the index in question, then displays the document in the document display area 171 of the display device 17.

Thus, by selecting an index included in the original browsing index list 236 displayed on the display device 17, the user browses the manual document corresponding to the index (Step S14001).

Now, when the user selects the item "Download" 236a (see Figs. 7 and 8) included in the original browsing index list 236 displayed on the display device 17, using the input device 16 (Step S14002), then, the HTML viewer 115 informs the download request unit 112 to that effect. Being informed of this, the download request unit 112 generates a download list presentation request, and informs the download content generation unit 213 of the request (Step S14003). At this time, the download request unit 112 searches the external storage 13 to examine if the external storage 13 has already stored a download folder. When the download folder is stored, the download request unit 112 sets the download management table, which is contained in the download folder, in the download list presentation request, before informing the download content generation unit 213 of the download list presentation request.

Receiving the download list presentation request, the download content generation unit 213 generates a download index list (Steps S14004 - S14008).

First, the download list processing unit 2131 judges if the download list presentation request includes the download management table (Step S14004). When it is not included, the download list processing unit 2131 reads the download index list 237 from the storage medium 15' through the reader 14, to present the download index list 237 to the HTML viewer 115 (Step S14005). By this, as shown in Fig. 9, the download index list 237 is displayed on the display device 17.

On the other hand, when the download list presentation request includes the download management table, then, the download list processing unit 2131 compares this download management table with the management table 238 stored in the storage medium 15', to identify manual documents that are not described in the download management table, i.e., manual documents that have not been downloaded to the external storage 13 (Step S14006). Here, if a same document of a new version or a new update date exists, that document also is treated as a document that has not been downloaded. Then, the download list processing unit 2131 reads the download index list 237 from the storage medium 15' through the reader 14, and processes this list such that it is possible to check only the check items of the manual documents that have not been downloaded into the external storage 13 (Step S14007), and presents the processed list to the HTML viewer 115 (Step S14008). By this, as shown in Fig. 10, the download index list is displayed on the display device 17, in a display form in which the already-downloaded documents can be identified.

Next, when the user checks check items 237b in the download index list 237 displayed on the display device 17, using the input device 16, and selects the item "Submit" 237a (see Figs. 9 and 10) (Step S14009), then, the HTML viewer 115 informs the download request unit 112 to that effect. Being informed of this, the download request unit 112 generates a download instruction that includes information of the indexes whose check items 237b are checked, and informs the download content generation unit 213 of this download instruction (Step S14010).

Receiving the download instruction, the download content generation unit 213 generates a download folder (Step S14011 - S14015).

First, the content obtaining unit 2132 searches the content database 235 of the storage medium 15' for the contents corresponding to the content information (the indexes whose check items 237b are checked by the user) included in the download instruction, and generates download contents as the respective copies of the retrieved contents (Step S14011).

Next, the browsing list generation unit 2133 generates a customized browsing index list (Step S14012).

In detail, in the case where the above-mentioned download list presentation request does not include the download management table, then, the browsing list generation unit 2133 deletes information of indexes of the contents other than the download contents obtained by the content obtaining unit 2132, from the original browsing index list 237. Then, the link destinations of the remained indexes are respectively set to the download contents, i.e., the copies of the contents indicated by the indexes in question. On the other hand, in the case where the above-mentioned download list presentation request includes the download management table, then, the browsing list generation unit 2133 deletes information of the indexes other than the indexes of the download contents obtained by the content obtaining unit 2132 and the indexes described in the download management table, from the original browsing index list 237. Then, the link destinations of the remained indexes are set to the download contents, i.e., the copies of the contents indicated by the indexes in question.

Next, the download management table generation unit 2134 refers to the management table 238 shown in Fig. 5, to generate a download management table (Step S14013).

In detail, in the case where the above-mentioned download list presentation request does not include the download management table, the download management table generation unit 2134 deletes information of the indexes other than the indexes of the download contents obtained by the content obtaining unit 2132, from the management table 238, to generate a download management table. On the other hand, the above-mentioned download list presentation request includes the download management table, then, the download management table generation unit 2134 deletes information of the indexes other than the indexes of the download contents obtained by the content obtaining unit 2132 and the indexes described in the download management table included in the request in question, from the management table 238, to generate a download management table.

Next, the dummy page generation unit 2135 generates dummy pages if necessary (Step S14014).

In detail, the dummy page generation unit 2135 refers to the download management table generated by the download management table generation unit 2134, to search for download contents to which link information is set. Next, the dummy page generation unit 2135 examines if the link destination of the link information set to each extracted download content is selected as another download content. In the case where a link destination of the link information set to an extracted download content is selected as another download content, then, the dummy page generation unit 2135 defines the link information set to the extracted download content such that the link destination in question becomes the above-mentioned another download content. On the other hand, in the case where a link destination of the link information set to an extracted download content is not selected as another download content, then, the dummy page generation unit 2135 generates a dummy page, which describes that the content has not been downloaded, in the HTML format, and defines the above-mentioned link information set to the extracted download content such that the link destination of the link information becomes this dummy page. Here, the same file name is given to this dummy page as the file name of the content of the link destination, with the intention of rewriting this dummy page by the content in question when the content is downloaded later.

When the above processing is finished, the download folder generation unit 2136 generates a download folder that contains the download contents obtained by the content obtaining unit 2132 (and processed by the dummy page generation unit 2135 if necessary), the customized browsing index list generated by the browsing list generation unit 2133, the download management table generated by the download management table generation unit 2134, and the dummy pages (if the dummy page generation unit 2135 has generated any dummy pages) (Step S14015).

When the download content generation unit 213 generates the download folder, the download request unit 112 stores this download folder as it is to the external storage 13, in the case where the download list presentation request does not include the download management table (No in Step S14016) (Step S14017). On the other hand, in the case where the above-mentioned download list presentation request includes the download management table (Yes in Step S14016), then, the download request unit 112 writes the download contents, the customized browsing index list, the download management table and the dummy pages contained in this download folder into the download folder stored in the external storage 13 (Step S1408). Thus, the customized browsing index list and the download management table of the download folder stored in the external storage 13 are updated to the customized browsing index list and the download management table stored in the newly-generated download folder. Further, a manual document contained in the download folder stored in the external storage 13 is updated to a new document of a new version or a new update date, if the newly-generated download folder contains such a new document. Further, a dummy page contained in the download folder stored in the external storage 13 is updated to a new document of the same file name as the dummy page, if the newly-generated download folder contains such a document.

Next, there will be described the case where a desired manual document is downloaded by accessing the storage medium 15', from the state that the manual utilizing apparatus 1' is accessing the download folder stored in the external storage 13 and browsing manual documents.

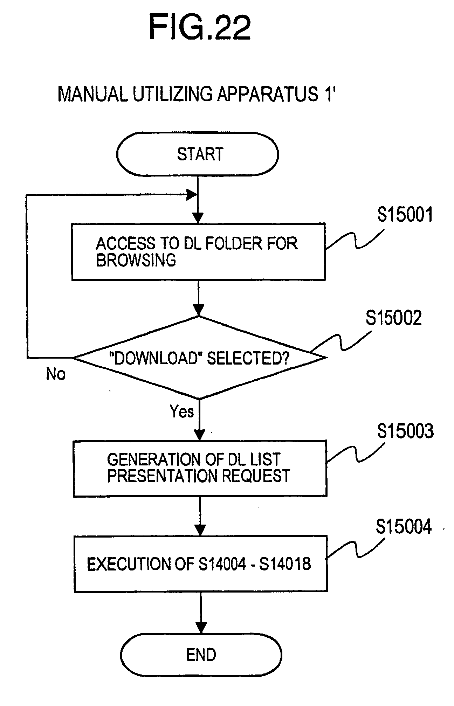

Fig. 22 is a flowchart for explaining operation in the case where the manual utilizing apparatus 1' downloads a desired manual document by accessing the storage medium 15', from the state that the manual utilizing apparatus 1' is accessing the download folder stored in the external storage 13 and browsing the manual documents.

The HTML viewer 115 reads the customized browsing index list from the download folder stored in the external storage 13 as described above, according to a user's instruction inputted through the input device 16, and makes the display device 17 display an initial screen comprising the customized browsing index list 136 and a document display area 171 for displaying a manual document contained in the download folder, as shown in Fig. 17.

Here, when the user selects any index from the customized browsing index list 136, using the input device 16, then, the HTML viewer 115 reads the document corresponding to the index in question from the download folder, based on the link information set to the index, and, as shown in Fig. 18, displays the document in the document display area 171 of the display device 17.

Further, as shown in Fig. 18, in the case where link information 171a to another document is set to the document displayed in the document display area 171, then, when the user of the manual utilizing apparatus 1 selects the link information 171a, using the input device 16, the HTML browser 115 reads the document of the link destination from the download folder and displays the document in the document display area 171 of the display device 17.

Thus, by selecting an index included in the customized browsing index list 136 displayed on the display device 17, the user can browse the manual document corresponding to the index in question (Step S15001).

Now, when the user selects the item "Download" 136a (see Figs. 18 and 19) in the customized browsing index list 136 displayed on the display device 17, using the input device 16 (Step S15002), then, the HTML viewer 115 informs the download request unit 112 to that effect. Being informed of this, the download request unit 112 reads the download management table in the download folder stored in the external storage 13, generates a download list presentation request including the information of the table in question, and informs the download content generation unit 213 of the download list presentation request (Step S15003). Thereafter, processing of Steps S14004 - S14018 shown in Fig. 21 is performed (Step S15004).

Hereinabove, the second embodiment of the present invention has been described.

According to the second embodiment, the user of the manual utilizing apparatus 1' can call a manual document through its index described in the customized browsing index list, to display it. The customized browsing index list describes only indexes of the manual documents (i.e., download contents) that have been downloaded from the external storage 15', and it is not confusing. Thus, the user of the manual utilizing apparatus 1' can efficiently browse the downloaded manual documents, using the customized browsing index list.

Next, a third embodiment of the present invention will be described.

In a manual browsing system to which the third embodiment of the present invention is applied, a manual providing apparatus 2' is used in place of the manual providing apparatus 2 in the manual browsing system of the first embodiment shown in Fig. 1. Here, a manual utilizing apparatus 1 used in the present embodiment is similar to the manual utilizing apparatus 1 except that processing in the download request unit 112 is different.

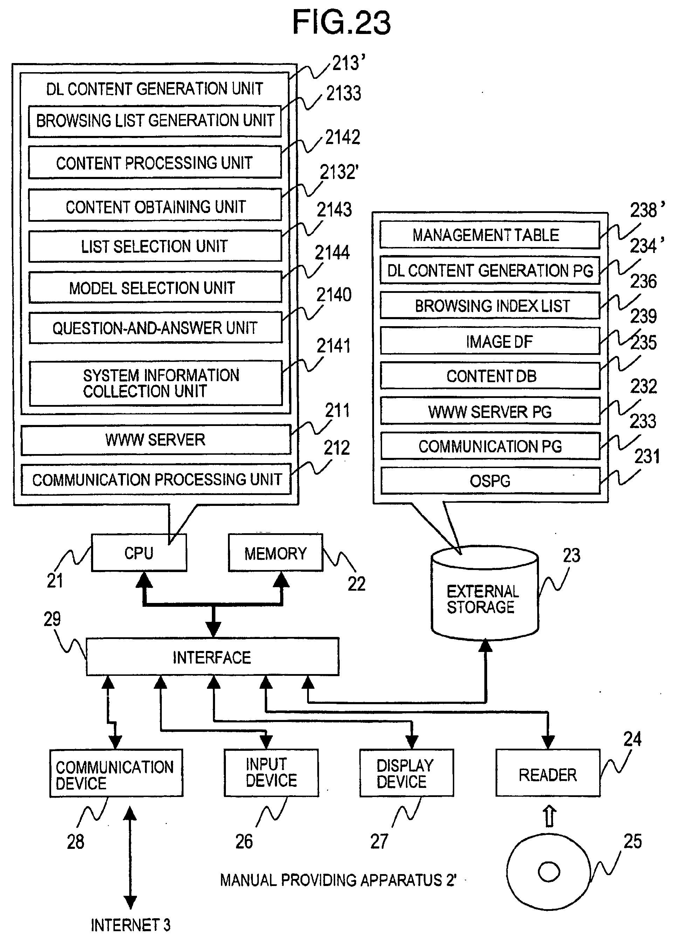

Fig. 23 is a block diagram showing the manual providing apparatus 2' of the present embodiment. Here, like numerals refer to components of like functions in this figure, Figs. 2 and 3 showing the apparatus described in the first embodiment, and Fig. 20 showing the apparatus described in the second embodiment.

As shown in the figure, the manual providing apparatus 2' can be implemented in an electronic computer of a configuration similar to the manual utilizing apparatus 2 of the above-mentioned first embodiment.

An external storage 23 stores an OS program 231, a WWW server program 232, a communication program 233, a download content generation program 234', a content database 235, an image data folder (DF) 239, an original browsing index list 236 and a management table 238'.

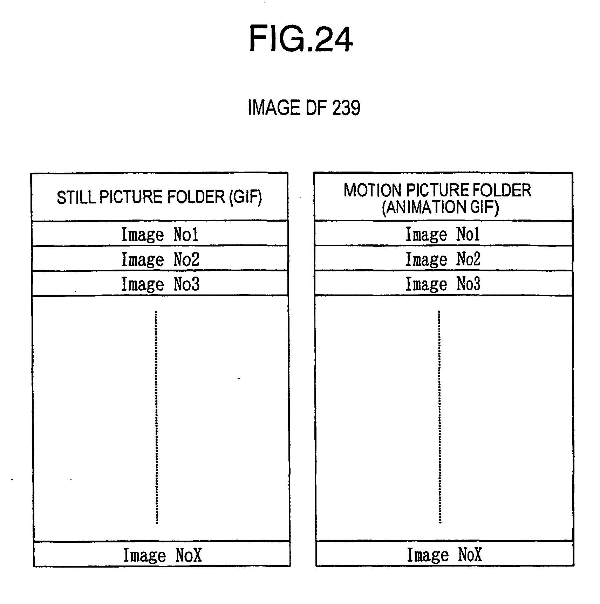

The image data folder 239 stores image data intended for a link destination of link information that is set to a manual document stored in the content database 235. Here, as shown in Fig. 24, the image folder 239 consists of a still picture folder and a motion picture folder. Two pieces of image data has a same name, and one is stored in a still picture data format (for example, GIF) in the still picture folder and the other in a motion picture data format (for example, Animation GIF) in the motion picture folder.

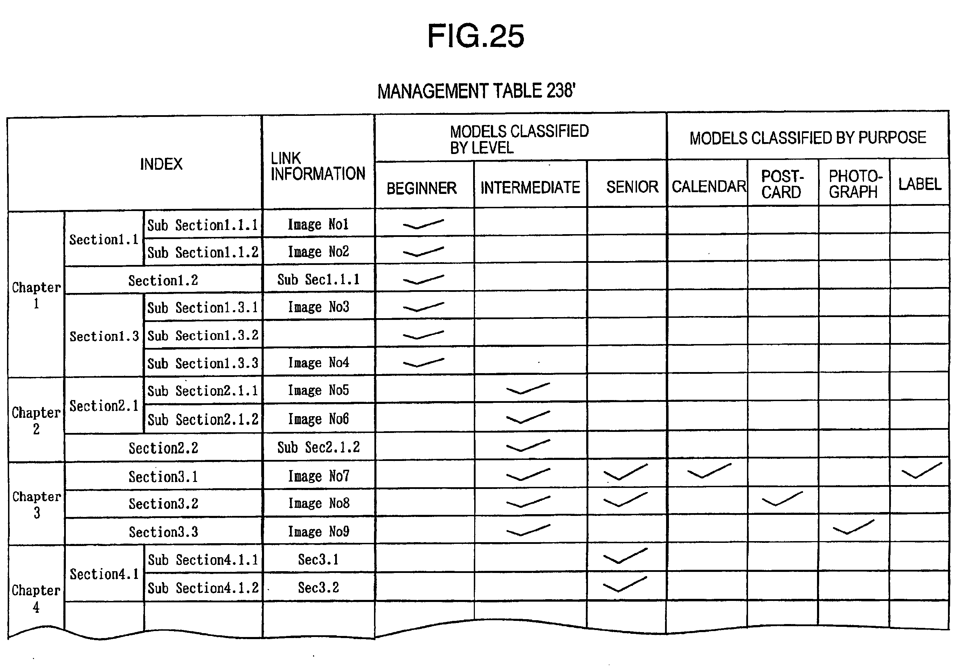

As shown in Fig. 25, for each manual document stored in the content database 235, the management table 238' describes link information set to the manual document in question. In the example of Fig. 25, it is shown that the document Sub Section 1.1.1 is linked to the image data Image No1, and the document Section 1.2 is linked to the document Sub Section 1.1.1.

Here, in the present embodiment, it is arranged that, when a link destination of link information of a certain document is image data, then, in displaying the document in question, the image data of the link destination is automatically read and attached onto the document in question. On the other hand, it is arranged that, when a link destination of link information of a certain document is another manual document and the former document is displayed, then, the above-mentioned another manual document is read and displayed in place of the former document when a user selects the link information displayed in the former document (so-called hot spot). Such arrangements of link information can be realized by using HTML.

Further, as shown in Fig. 25, the management table 238' provides entries corresponding respectively to manual documents stored in the content database 235, for each of a plurality of models (three models (editions) classified by knowledge level, i.e., beginner, intermediate and senior models, and four models (editions) classified by purpose, i.e., calendar print, postcard print, photograph print and label print models, totaling to seven models). For each model, manual documents that should be downloaded from the content database 235 to the manual utilizing apparatus 1 are checked in their corresponding entries. For example, in the case of Fig. 25, the beginner model selects all the documents contained in Chapter 1 as the download contents, and the intermediate model selects all the documents contained in Chapter 2 and Chapter 3 as the download contents. Here, the present embodiment assumes a printer manual.

The CPU 21 loads the WWW server program 232, the communication program 233 and the download content generation program 234' onto the memory 12, to execute them. By this, a WWW server 211, a communication processing unit 212 and a DL content generation unit 213' are implemented in the computer.

The download content generation unit 213' reads only manual documents suited to the knowledge level or intended purpose of the user of the manual utilizing apparatus 1 from the content database 235, and downloads to the manual utilizing apparatus 1.

The download content generation unit 213' comprises a system information collection unit 2141, a question-and-answer unit 2140, a model selection unit 2144, a list selection unit 2143, a content obtaining unit 2132', a browsing list generation unit 2133, and a content processing unit 2142.

The system information collection unit 2141 acquires system information (for example, an operation frequency of the CPU 11, a capacity of the memory 12, etc.) of the electronic computer in which the manual utilizing apparatus 1 is implemented. The system information is included in a download instruction sent from the manual utilizing apparatus 1.

The question-and-answer unit 2140 transmits a plurality of predetermined questions to the manual utilizing apparatus 1 through the communication processing unit 212, to present them in a wizard form to the user of the manual utilizing apparatus 1. Then, the question-and-answer unit 2140 receives answers, which the user inputs using the input device 16, from the manual utilizing apparatus 1 through the communication processing unit 212. Here, in the present embodiment, the questions presented to the user includes questions about his level of knowledge of printer (as described above, the present embodiment assumes a printer manual as the manual to download), a question about his intended purpose of the printer, and a question about the font size used in displaying downloaded manual documents on the display device 17 (or a question about the age of the user).

The model selection unit 2144 selects at least one model from the plurality of models described in the management table 238', according to the answers received by the question-and-answer unit 2140 from the manual utilizing apparatus 1. In detail, according to the answers received through the question-and-answer unit 2140 to the questions about the level of knowledge of printer, one model is selected out of the three models, the beginner model, the intermediate model and the senior model shown in Fig. 25. Further, when the user answers to the question about the intended purpose of the printer, one model of intended use answered by the user is selected out of the four models, the calendar print model, the postcard print model, the photograph print model and the label print model shown in Fig. 25.

The list selection unit 2143 acquires the indexes of the manual documents included in the model (or models) selected by the model selection unit 2144, from the management table 238' shown in Fig. 25. For example, when the beginner model and the label print model are selected by the model selection unit 2144, the list selection unit 2143 acquires indexes of all the documents included in Chapter 1 and the document of Section 3.1, from the management table 238' shown in Fig. 25.

The content obtaining unit 2132' searches the content database 235 for the manual documents corresponding to the indexes selected by the list selection unit 2143, and copies the retrieved documents. For example, when the list selection unit 2143 acquires the indexes of all the documents included in Chapter 1 and the document of Section 3.1, then, the content obtaining unit 2132' copies all the documents included in Chapter 1 and the document of Section 3.1 stored in the content database 235 shown in Fig. 4. Then, those copies becomes the download contents.

Further, the content obtaining unit 2132' refers to the management table 238' shown in Fig. 25, to judge if link information to image data is set in the download content. When the link information to image data is set, the content obtaining unit 2132' examines throughput of the manual utilizing apparatus 1, which is specified by the system information collected by the system information collection unit 2141. Then, when the throughput is more than or equal to a predetermined level (for example, the operation frequency of the CPU 11 is 300 MHz and the capacity of the memory 12 is 64 Mbytes with respect to the computer in which the manual utilizing apparatus 1 is implemented), then, data of the link destination is copied from the motion picture folder of the image data folder 239 shown in Fig. 24. When the throughput is less than the above-mentioned predetermined level, then, data of the link destination is copied from the still picture folder of the image data folder 239. For example, in the case where the content obtaining unit 2132' obtains the document Sub Section 1.1.1 and the throughput of the manual utilizing apparatus 1 specified by the system information collected by the system information collection unit 2141 is more than or equal to the predetermined level, then, the content obtaining unit 2132' copies Image No1, i.e., the data of the link information set to the document Sub Section 1.1.1 (see Fig. 25) from the motion picture folder. When the throughput is less than the predetermined level, the content obtaining unit 2132' copies Image No1 from the still picture folder.

Here, the present embodiment is arranged such that, in the management table 238' shown in Fig. 25, when link information to another manual document is set to a manual document included in a certain model, then, the mentioned another manual document is included in the same model also. For example, in Fig. 25, it is arranged that the link destination of the link information set to the document Sub Section 4.1.1 included in the senior model is the document Section 3.1, and this document Section 3.1 is also included in the same senior model. Accordingly, when the link information to another manual document is set in the manual documents obtained, as the download contents, by the content obtaining unit 2132', then, the mentioned another manual document is also obtained, as the download content, by the content obtaining unit 2132'. Thus, even when a link destination of link information set to a manual document obtained as a download content is another manual document, it is not necessary to further copy the mentioned another manual document as the data of the link destination.

The content processing unit 2142 decides the font size of the download contents, according to the user's answer received by the question-and-answer unit 2140 from the manual utilizing apparatus 1, to the question about the font size (or, user's age). Then, the content processing unit 2142 arranges the manual documents obtained by the content obtaining unit 21425 such that the documents in question are displayed on the display device 17 of the manual utilizing apparatus 1, in the font size decided above. Such arrangement of the font size is realized by using HTML.

Next, operation of the manual browsing system having the above-described configuration will be described.

First, operation of the manual providing apparatus 2' will be described.

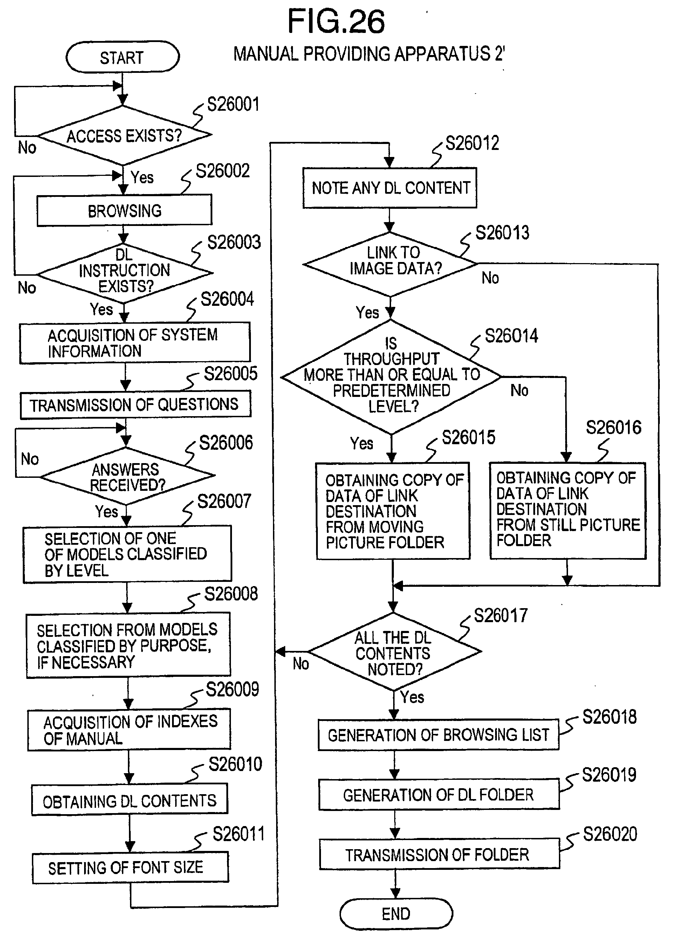

Fig. 26 is a flowchart for explaining operation of the manual providing apparatus 2' shown in Fig. 23.

When the WWW server 211 is accessed by the manual utilizing apparatus 1 through the communication processing apparatus 212 (Step S26001), then, the WWW server 211 allows the WWW browser 111 of the manual utilizing apparatus 1 to browse the contents (Step S26002).

First, the WWW server 211 presents an initial screen as shown in Fig. 7 to the WWW browser 111. Here, when the user of the manual utilizing apparatus 1 selects any index from the original browsing index list 236, using the input device 16, then, the WWW server 211 reads the content specified by the link information set to the index in question, from the content database 235 shown in Fig. 4, and presents the content to the WWW browser 111. By this, as shown in Fig. 8, the document corresponding to the above-mentioned index selected by the user is displayed in the document display area 171 of the display device 17 of the manual utilizing apparatus 1.

Thus, by selecting an index contained in the original browsing index list 236 displayed on the display device 17, the user of the manual utilizing apparatus 1 can browse online only the manual document corresponding to the index.

Now, when the WWW server 211 receives a download instruction from the manual utilizing apparatus 1 through the communication processing unit 212 (Step S26003), then, the WWW server 211 informs the download content generation unit 213' to that effect. Being informed of this, the system information collection unit 2141 of the download content generation unit 213' acquires the system information (the system information of the computer in which the manual utilizing apparatus 1 is implemented) included in the download instruction in question (Step S26004).

Here, the download instruction is generated by the download request unit 112 when the user of the manual utilizing apparatus 1 selects the item "Download" 236a (see Figs. 7 and 8) included in the original browsing index list 236 displayed on the display device 17, using the input device 16. And, the generated download instruction is transmitted from the manual utilizing apparatus 1 to the manual providing apparatus 2.

Next, the question-and-answer unit 2140 transmits the plurality of predetermined questions to the manual utilizing apparatus 1 through the communication processing unit 212, to present the questions in the wizard form to the user of the manual utilizing apparatus 1. Then, the question-and-answer unit 2140 receives answers that the user inputs using the input device 16, from the manual utilizing apparatus 1 through the communication processing unit 212 (Steps S26005 and S26006).

As described above, in the present embodiment, as the plurality of predetermined questions, the questions about the level of knowledge of printer and the question about the font size or the age are transmitted to the manual utilizing apparatus 1 to present them in the wizard form to the user of the manual utilizing apparatus 1.

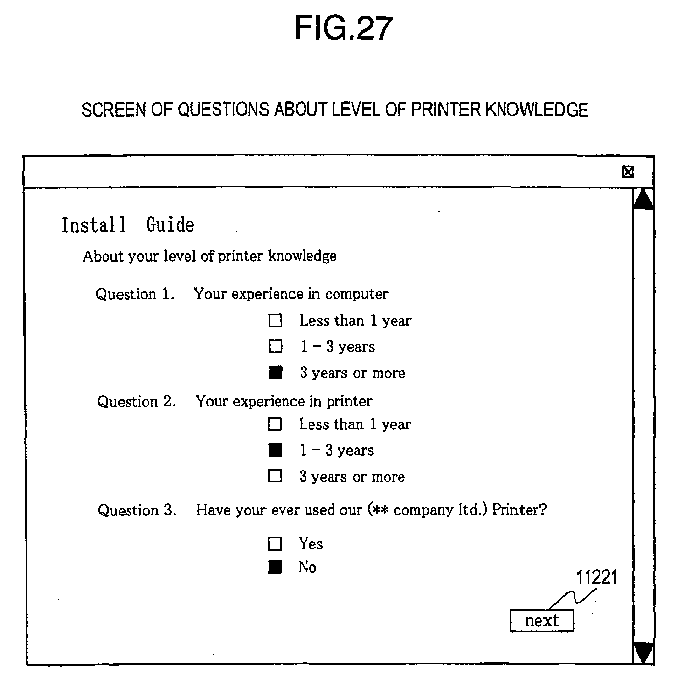

Fig. 27 is a view showing an example of the questions about the level of knowledge of printer, which the question-and-answer unit 2140 displays on the display device 17 of the manual utilizing apparatus 1. It is arranged that, for each question shown in the figure, the user of the manual utilizing apparatus 1 can check an appropriate item, using the input device 16. The example of Fig. 27 shows a case where the user has checked the item of "3 years or more" for the question 1 about the years of computer experience, the item of "1 - 3 years" for the question 2 about the years of printer experience, and the item of "No" for the question 3 about the experience of using the company's printer (i.e., printer of the printer maker for which the provided manual is intended). When the user checks appropriate items for the questions 1 - 3 shown in Fig. 27, and selects the "Next" button 11221, then, the download request unit 112 of the manual utilizing apparatus 1 transmits the information of the checked items as the answers to the questions about the level of knowledge of printer, to the manual providing apparatus 2'. Receiving the answers to the questions 1 - 3 about the level of knowledge of printer from the manual utilizing apparatus 1, the question-and-answer unit 2140 transmits the question about the intended purpose of the printer, to the manual utilizing apparatus 1, to present the question to the user of the manual utilizing apparatus 1.

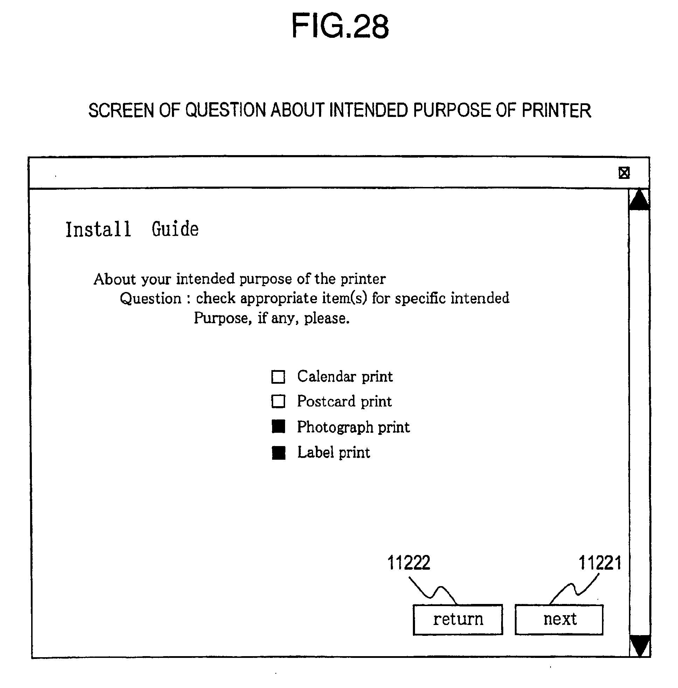

Fig. 28 is a view showing a display example of the question about the intended purpose of the printer, which the question-and-answer unit 2140 displays on the display device 17 of the manual utilizing apparatus 1. For the question shown in the figure, the user of the manual utilizing apparatus 1 can check an appropriate item or items (a plurality of items can be selected), using the input device 16. Here, the example of Fig. 28 shows a case where the user has checked the items of "photograph print" and "label print", using the input device 16. When the user checks appropriate items for the question shown in Fig. 28 (no item is checked if not necessary) and selects the "Next" button 11221, then, the download request unit 112 of the manual utilizing apparatus 1 transmits the information of the checked items as the answer to the question about the intended purpose of the printer, to the manual providing apparatus 2'. Receiving the answer about the intended purpose of the printer from the manual utilizing apparatus 1, the question-and-answer unit 2140 transmits the question about the font size to the manual utilizing apparatus 1, to present the question to the user of the manual utilizing apparatus 1. Here, when the "Return" button 11222 is selected, the download request unit 112 of the manual utilizing apparatus 1 informs the manual providing apparatus 2' to that effect. Being informed of this, the question-and-answer unit 2140 transmits the questions about the level of knowledge of printer, which are shown in Fig. 27, to the manual utilizing apparatus 1 again, and receives the answers to the question about the level of knowledge of printer, from the manual utilizing apparatus 1 again.

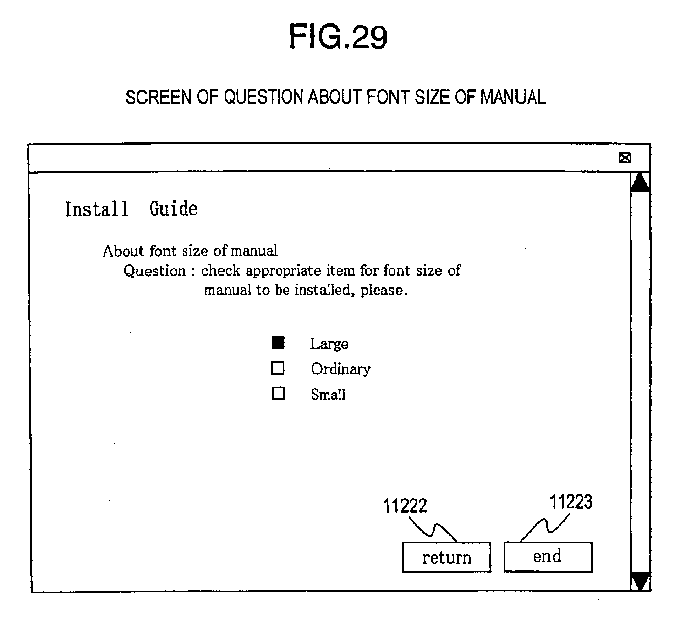

Fig. 29 is a view showing an example of the question about the font size of the manual that the question-and-answer unit 2140 displays on the display device 17 of the manual utilizing apparatus 1. For the question shown in the figure, the user of the manual utilizing apparatus 1 can check an appropriate item, using the input device 16. Here, the example of Fig. 29 shows a case where the user checked the item of "Larger" font size, using the input device 16. When the user checks an appropriate item for the question shown in Fig. 29 and selects the "End" button 11223, then, the download request unit 112 of the manual utilizing apparatus 1 transmits the information of the checked item as the answer to the question about the font size, to the manual providing apparatus 2'. Receiving the answer to the question about the font size from the manual utilizing apparatus 1, then, the question-and-answer unit 2140 informs the content processing unit 2142 of the answer to the question about the font size. Further, the question-and-answer unit 2140 informs the model selection unit 2144 of the answers to the questions about the level of knowledge of printer and the answer to the question about the intended purpose of the printer received earlier from the manual utilizing apparatus 1. Here, when the "Return" button 11222 is selected, the download request unit 112 of the manual utilizing apparatus 1 informs the manual providing apparatus 2' to that effect. Being informed of this, the question-and-answer unit 2140 transmits the question about the intended purpose of the printer, which is shown in Fig. 28, to the manual utilizing apparatus 1 again, and receives the answer to the question about the intended purpose of the printer from the manual utilizing apparatus 1 again.

Now, when the model selection unit 2144 receives the answers to the question about the level of knowledge of printer and the answer to the intended purpose of the printer from the question-and-answer unit 2140 (Yes in Step S26006), then, the model selection unit 2144 first selects one of the models classified by knowledge level (the beginner model, the intermediate model and the senior model) described in the management table 238' shown in Fig. 25, according to the answers to the questions about the level of knowledge of printer, and based on predetermined selection criteria (Step S26007).

For example, in the display example shown in Fig. 27 of the questions about the level of knowledge of printer, the senior model is selected when the answers show "3 years or more" experience both in computer and in printer, and "Yes" with respect to experience of using the company's printer. The beginner model is selected when the answers show "Less than 1 year" experience both in computer and in printer, and "No" with respect to experience of using the company's printer. And, in the other cases, the intermediate model is selected.

Then, according to the answer to the question about the intended purpose of the printer, the model selection unit 2144 selects one model out of the models classified by purpose (the calendar print model, the postcard print model, the photograph print model and the label print model), if necessary (Step S26008).

For example, in the display example of the question about the intended purpose of the printer, shown in Fig. 28, when the items of "photograph print" and "label print" are checked, the photograph print model and the label print model are selected. Here, when no item is selected in Fig. 28, no model is selected from the models classified by purpose described in the management table 238' shown in Fig. 25.

Next, the list selection unit 2143 acquires the indexes of the manual documents included in the models selected by the model selection unit 2144 in Steps S26007 - S26008, from the management table 238' shown in Fig. 25 (Step S26009).

Next, the content obtaining unit 2132' searches the content database 235 stored in the external storage 23, for the manual documents corresponding to the indexes acquired by the list selection unit 2143 in Step S26009, and copies those manual documents, to obtain those copies as the download contents (Step S26010).

Next, according to the answer to the question about the font size, which is received from the question-and-answer unit 2140, the content processing unit 2142 sets the font size for each download content obtained in Step S26010 (Step S26011).

In detail, in the display example shown in Fig. 29 of the question about the font size, when the item of "Smaller" is checked, then, the font size of each download content obtained in Step S26010 is made smaller by predetermined points. And, when the item of "Larger" is checked, then, the font size is made larger by predetermined points. Here, in Fig. 29, when the item "Ordinary" is checked, the font size is not changed.

Then, with respect to each download content obtained in Step S26010 (Steps S26012 and S26017), the content processing unit 2142 refers to the management table 238' shown in Fig. 25 to judge if link information to image data is set to the content in question (Step S26013). When such link information is set, the content processing unit 2142 examines the throughput of the manual utilizing apparatus 1, which is specified by the system information acquired by the system information collection unit 2141. Then, when the throughput in question is more than or equal to the predetermined level (Yes in Step S26014), the content processing unit 2142 copies the link destination data from the motion picture folder of the image data folder 239 shown in Fig. 24 (Step S26015). And, when the throughput is less than the predetermined level (No in Step S26014), the content processing unit 2142 copies the link destination data from the still picture folder of the image data folder 239 (Step S26016).

When the copying of the data of the link destination of the link information set to each download content is finished, then, the browsing list generation unit 2133 generates a customized browsing index list (Step S26018).

In detail, the browsing list generation unit 2133 reads the original browsing index list 236 from the external storage 23. The, the browsing list generation unit 2133 deletes information of indexes of contents other than the download contents obtained by the content obtaining unit 2132', from the original browsing index list 236, and sets the link destinations of the remained indexes to the download contents, i.e., the copies of the contents shown by the indexes in question.

When the above processing is finished, the download content generation unit 213' generates a download folder that contains the download contents obtained by the content obtaining unit 2132' (and changed in its font size by the content processing unit 1126 if necessary), the copy of the image data of the link destination of the link information set to each download content, and the customized browsing index list generated by the browsing list generation unit 2133 (Step S26019), and transmits this folder to the manual utilizing apparatus 1 through the communication processing unit 212 (Step S26020).

Next, operation of the manual utilizing apparatus 1 used in the browsing system of the present embodiment will be described.

First, there will be described operation in the case where manual documents are downloaded from the manual providing apparatus 2'.

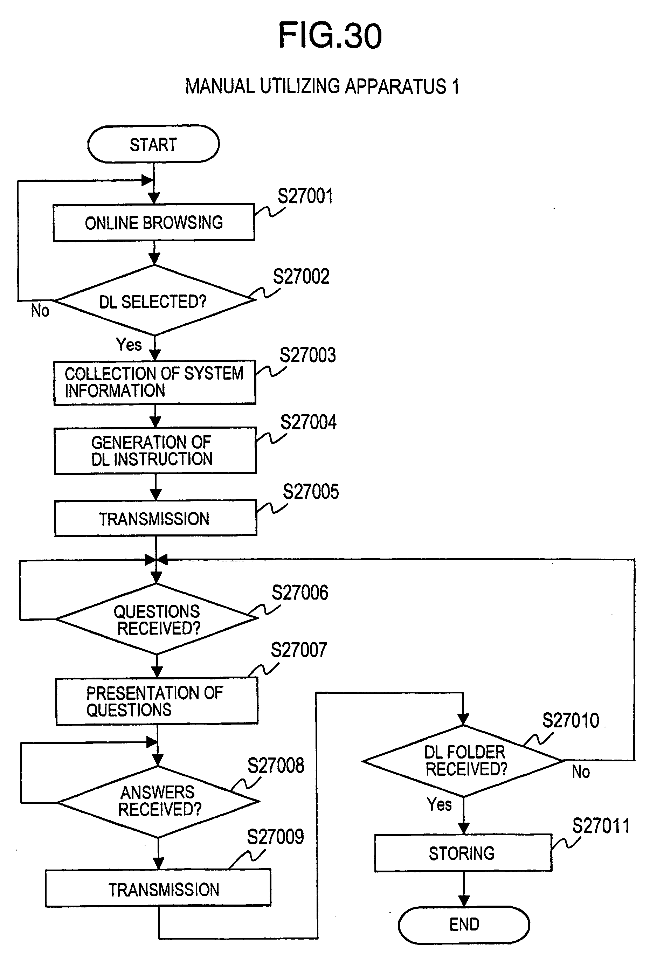

Fig. 30 is a flowchart for explaining operation in the case where the manual utilizing apparatus 1 used in the browsing system of the present embodiment downloads manual documents from the manual providing apparatus 2'.

When the WWW browser 111 accesses the WWW server 211 of the manual providing apparatus 2' through the communication processing unit 113 according to a user's instruction inputted through the input device 16, the WWW browser 111 receives the original browsing index list 236 from the WWW server 211 and displays an initial screen as shown in Fig. 7 on the display device 17.

Here, when the user of the manual utilizing apparatus 1 selects any index from the original browsing index list 236, using the input device 16, the WWW browser 111 informs the WWW server 211 of the link information set to the index in question. Then, the WWW browser 111 receives data of the document corresponding to the index in question from the WWW server 211, and, as shown in Fig. 8, displays the document in the document display area 172 of the display device 17.

Thus, by selecting an index included in the original browsing index list displayed on the display device 17, the user of the manual utilizing apparatus 1 can browse only the manual document corresponding to the index online (Step S27001).

Now, when the user selects the item "Download" 236a (see Figs. 7 and 8) included in the original browsing index list 236 displayed on the display device 17, using the input device 16 (Step S27002), the WWW browser 111 informs the download request unit 112 to that effect. Being informed of this, the download request unit 112 collects system information (for example, an operation frequency of the CPU 111, a capacity of the memory 12, etc.) of the computer in which the manual utilizing apparatus 1 is implemented, from BIOS (Basic Input/Output System) or OS implemented by executing the OS program 131 (Step S27003). Then, the download request unit 112 generates a download instruction including the collected system information (Step S27004), and transmits the instruction to the manual providing apparatus 2' through the communication processing unit 113 (Step S27005).

Then, receiving the questions from the manual providing apparatus 2' (Step S27006), the download request unit 112 displays question screens in a wizard form as shown in Figs. 27 - 29 on the display device 17, through the WWW browser 111 (Step S27007). Then, when the respective answers to the questions displayed on the display device are received from the user through the input device 16 (Step S27008), the download request unit 112 transmits the contents of the answers to the manual providing apparatus 2' through the communication processing unit 115 (Step S27009). Now, when the download request unit 112 receives all the questions from the manual providing apparatus 2' and transmits the respective answers received from the user with respect to the questions, to the manual providing apparatus 2', then, the download request unit 112 receives the download folder from the manual providing apparatus 2' (Step S27010), and stores the received download folder to the external storage 13 (Step S27011).

Next, there will be described operation in the case of browsing the download contents downloaded to the external storage 13 as described above.

First, according to a user's instruction inputted through the input device 16, the WWW browser 111 reads the customized browsing index list from the download folder that is stored in the external storage 13 as described above, and presents the initial screen as shown in Fig. 17 on the display device 17. As shown in the figure, this initial screen comprises two frames. One frame displays the customized browsing index list 136 contained in the download folder, and the other frame is the document display area 171 for displaying a manual document contained in the download folder.

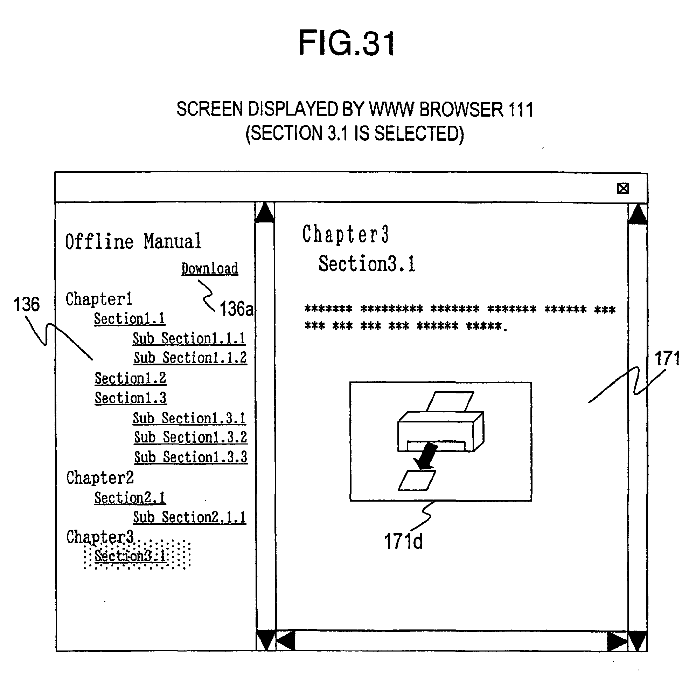

Here, when the user selects any index from the customized browsing index list 136, using the input device 16, then, the WWW browser 111 reads the document corresponding to the index in question, from the download folder, based on the link information set to the index in question, and displays the document in the document display area 171 of the display device 17, as shown in Figs. 18 and 31.

Here, Fig. 18 shows a case where link information 171a to another document is set to the document displayed in the document display area 171. When the user of the manual utilizing apparatus 1 selects this link information 171a using the input device 16, then, the WWW browser 111 reads the document of the link destination (as described above, a document of a link destination is always a download content, in the present embodiment) from the download folder, and displays the document in the document display area 171 of the display device 17.

Fig. 31 shows a case where link information to image data 172d is set to the document displayed in the document display area 171. The WWW browser 111 reads the image data of the link destination (the link destination data) from the download folder, and displays the image data, laying it over the above-mentioned document. Here, when the image data of the link destination is motion picture data (for example, of Animation GIF), it is displayed as a motion picture, and when it is still picture data (for example, of GIF), it is displayed as a still picture.

Thus, by selecting an index included in the customized browsing index list 136 displayed on the display device 17, the user of the manual utilizing apparatus 1 can browse offline the manual document corresponding to the index in question.

Hereinabove, the third embodiment of the present invention has been described.

According to the above-described third embodiment, the manual providing apparatus 2' decides manual documents to download to the manual utilizing apparatus 1, according to user's answers to the questions presented by the manual utilizing apparatus 1 to the user. In detail, the questions about the level of knowledge of printer and the question about the intended purpose of the printer are presented to the user of the manual utilizing apparatus 1. Then, the manual documents appropriate for the user's knowledge level and intended purpose of the printer are specified by the answers to the above questions, and decided as the download contents.

As a result, only the manual documents appropriate for the user's knowledge level and intended purpose are downloaded to the manual utilizing apparatus 1. Accordingly, it is possible to avoid a case where unnecessary manuals tighten the valuable storage capacity of the external storage 13 such as a hard disk device.

Further, according to the above-described third embodiment, the user of the manual utilizing apparatus 1 can call and display a manual document (a download content) by means of an index described in the customized browsing index list 136. The customized browsing index list 136 describes only the indexes of the manual documents downloaded from the manual providing apparatus 2', and it is not confusing. Thus, the user of the manual utilizing apparatus 1 can efficiently browse the downloaded manual documents, using the customized browsing index list 136.

Further, according to the above-described third embodiment, in the case where image data is linked to a download content, when the throughput of the computer in which the manual utilizing apparatus 1 is implemented is more than or equal to a predetermined level, the image data in question is downloaded as motion picture data together with the download content to the external storage 13. When the throughput is less than the predetermined level, the image data is downloaded as still picture data together with the download content to the external storage 13. As a result, the manual utilizing apparatus 1 can display the downloaded manual in a display format that considers the throughput of the computer in which that apparatus is implemented.

In addition, according to the above-described third embodiment, the manual providing apparatus 2' decides the font size of the download contents, according to the answer to the question about the font size presented to the user of the manual utilizing apparatus 1. Accordingly, the user of the manual utilizing apparatus 1 can display the downloaded contents in a favorable font size.

Further, according to the above-described third embodiment, information of the user's level of knowledge and intended purpose is sent from the manual utilizing apparatus 1 to the manual providing apparatus 2'. Thus, a maker (a printer maker in the present embodiment), who supplies the manual to the manual utilizing apparatus 1, can grasp the user group of the company's products by utilizing the information effectively, and can efficiently use the information for future development.

Next, a fourth embodiment of the present invention will be described.

The above-described fourth embodiment describes the case where the manual utilizing apparatus 1 downloads the manual from the manual providing apparatus 2' through Internet 3. On the other hand, in the present embodiment, will be described a case where the manual utilizing apparatus 1" downloads manual documents from a portable storage medium such as a CD-ROM or DVD-ROM to an external storage such as a hard disk.

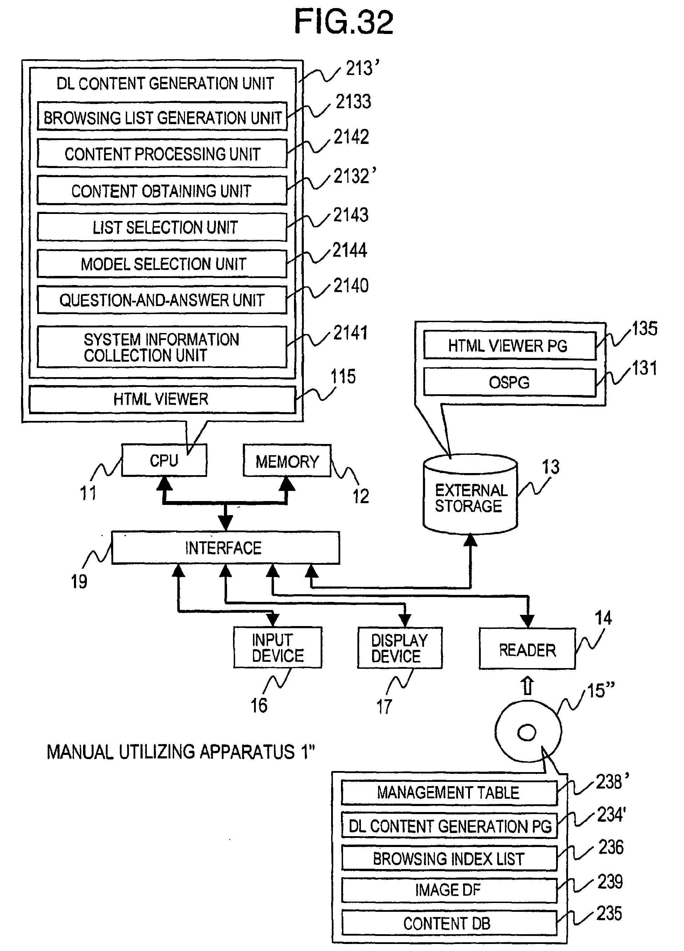

Fig. 32 is a block diagram of a manual utilizing apparatus 1" to which the fourth embodiment of the present invention is applied. Here, like numerals refer to components of like functions in this figure and Figs. 2 and 3 showing the first embodiment, Fig. 20 showing the second embodiment, and Fig. 23 showing the third embodiment.

As shown in the figure, the manual utilizing apparatus 1" of the present embodiment can be implemented in an electronic computer of a configuration similar to the manual utilizing apparatus 1 of the above-described first embodiment.

A storage medium 15" stores a content database 235, an image data folder 239, an original browsing index list 236, a download content generation program 234', and a management table 238'.

An external storage 13 stores an OS program 131 and an HTML viewer program 135. Here, the HTML viewer program 135 may be read by a reader 14 from the storage medium 15" and downloaded to the external storage 13, or may be downloaded to the external storage 13 from Internet through a communication unit 18 that is not shown.

A CPU 11 loads the HTML viewer program 135 stored in the external storage 13 and the download content generation program 234' stored in the storage medium 15" onto a memory 12 and executes them. By this, an HTML viewer 115 and a download content generation unit 213' are implemented in the computer.

The HTML viewer 115 browses HTML format data stored in the external 13 or the storage medium 15". The download content generation unit 213' is fundamentally similar to one used in the apparatus of the third embodiment shown in Fig. 23. However, in the above-described third embodiment, the manual utilizing apparatus 1 downloads a manual document from the manual providing apparatus 2' through Internet 3 to the external storage 13. On the other hand, in the present embodiment, the manual utilizing apparatus 1" downloads a manual from the storage medium 15" to the external storage 13, and thus, processing is slightly different.

Next, operation of the manual utilizing apparatus 1" of the present embodiment will be described.

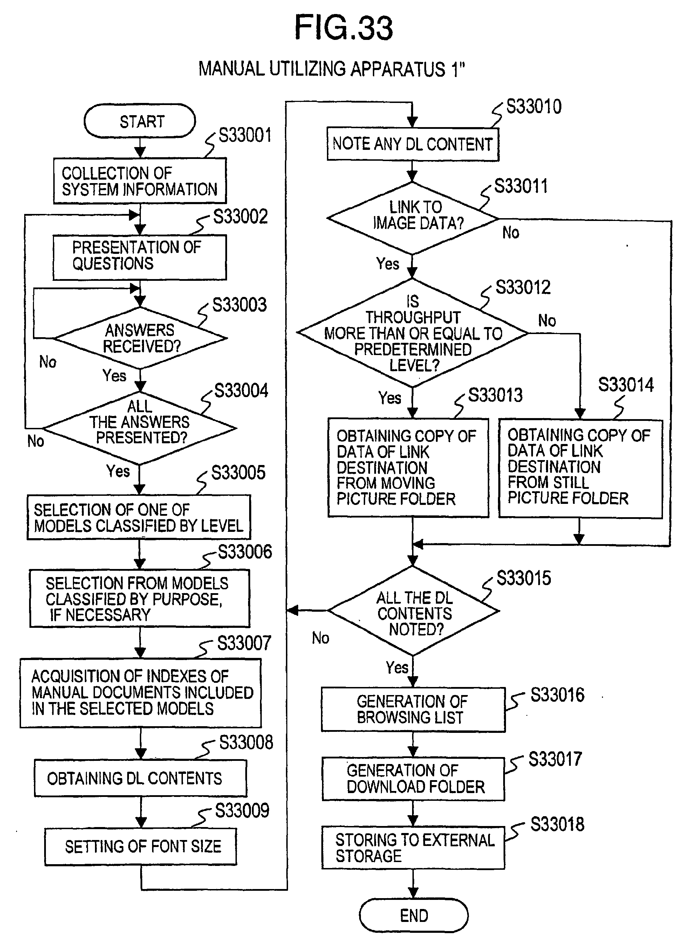

Fig. 33 is a flowchart for explaining operation of the manual utilizing apparatus 1" shown in Fig. 32. This flow is started when the download content generation program 234' is read from the storage medium 15" onto the memory 12 according to a user's instruction inputted by an input device 16 and executed by the CPU 11 to implement the download content generation unit 213' in the computer.

First, a system information collection unit 2141 collects system information of the computer in which the manual utilizing apparatus 1" of the present embodiment is implemented, from BIOS or OS (Step S33001).

Next, a question-and-answer unit 2140 presents a plurality of predetermined questions in a wizard form, using a display device 17, similarly to the third embodiment described referring to Figs. 27 - 29. Then, answers to those questions are received from the user through the input device 16 (Steps S33002 - S33004).

Now, when the question-and-answer unit 2140 receives answers to all the questions presented to the user (Yes in Step S33004), a model selection unit 2144 selects one model out of models classified by knowledge level (a beginner model, an intermediate model, and senior model) described in the management table 238' shown in Fig. 25, according to answers to questions about the level of knowledge of printer, which are received by the question-and-answer unit 2140, and based on a predetermined selection criteria (Step S33005).

Then, according to an answer to a question about the intended purpose of the printer, which is received by the question-and-answer unit 2140, the model selection unit 2144 selects one model out of the models classified by purpose (a calendar print model, a postcard print model, a photograph print model and a label print model) described in the management table 238 shown in Fig. 25, if necessary (Step S33006).

Next, a list selection unit 2143 acquires the indexes of the manual documents included in the models selected by the model selection unit 2144 in Steps S33005 - S33006, from the management table 238' shown in Fig. 25 (Step S33007).

Next, a content obtaining unit 2132' searches the content database 235 shown in Fig. 2 stored in the storage medium 15" for the manual documents corresponding to the indexes acquired by the list selection unit 2143 in Step S33007, and copies them, to obtain those copies as the download contents (Step S33008).

Next, according to an answer to a question about the font size, which is received by the question-and-answer unit 2140, a content processing unit 2142 set the font size for each download content obtained in Step S33008 (Step S33009).

Next, with respect to each download content obtained in Step S33008 (Steps S33010 and S33015), the content obtaining unit 2132' refers to the management table 238' shown in Fig. 25 to judge if link information to image data is set to the content in question (Step S33011). When such link information is set, the content obtaining unit 2132' examines the throughput of the computer in which the manual utilizing apparatus 1 of the present embodiment is implemented. The throughput is specified by the system information collected by the system information collection unit 2140. Then, when the throughput in question is more than or equal to a predetermined level (Yes in Step S33012), then the content obtaining unit 2132' copies the link destination data from the motion picture folder of the image data folder 239 shown in Fig. 24 (Steps S33013). And, when the throughput is less than the predetermined level (No in Step S33012), the content obtaining unit 2132' copies the link destination data from the still picture folder of the image data folder 239 (Step S33014).

Now, when the copying of the image data as the link destination of the link information set to each download content is finished, then, a browsing list generation unit 2133 generates a customized browsing index list (Step S33016).

In detail, the original browsing index list 236 is read from the storage medium 15" through the reader 14. And, the browsing list generation unit 2133 deletes information of indexes of contents other than the download contents obtained by the content obtaining unit 2132', from the original browsing index list 236. Then, the link destinations of the remained indexes are respectively set to the download contents, i.e., the copies of the contents shown by the indexes in question.

When the above processing is finished, the download content generation unit 213' generates a download folder that contains the download contents obtained by the content obtaining unit 2132' (and changed in its font size by the content processing unit 1126, if necessary), the copy of image data as the link destination of the link information set to each download content, and the customized browsing index list generated by the browsing list generation unit 2133 (Step S33017), and stores this folder to the external storage 13 (Step S33018).

Now, the user of the manual utilizing apparatus 1" can browse the download contents contained in the download folder stored in the external storage 13 as described above, similarly to the third embodiment described above referring to Figs. 30 and 31.

Hereinabove, the fourth embodiment of the present invention has been described.

Also the present embodiment can obtain the same effects as the above-described third embodiment.

The present invention is not limited to the above embodiments, and can be variously modified within the gist of the invention.

For example, in the above-described first and second embodiments, the dummy page generation unit 2135 refers to the download management table generated by the download management generation unit 2134, to examine if each download content has link information set to that content. When link information is set, it is examined if the link destination of the link information is selected as another download content. When it is not selected, the dummy page generation unit 2135 generates an HTML format dummy page describing that the content is not downloaded. However, the present invention is not limited to this. For every content that has not been selected in the download content, an HTML format dummy page describing that the content in question has not been downloaded may be generated. And, a file name of each dummy page is set as a name of a download content. Or, also the content of the link destination of the above-mentioned link information may be included in the download contents, and the content obtaining unit 2132 may make the download folder contain that content also. In that case, the dummy page generation unit 2135 is not required.

Further, in the above-described third and fourth embodiments, the questions about the level of knowledge of printer and intended purpose, which are presented to the user of the manual utilizing apparatus 1 or 1", may be given at the time of the conventional online registration (user registration through a network).

Further, in the above-described first and third embodiments, the browsing list generation unit 2133 implemented on the side of the manual providing apparatus 2 or 2' may be implemented on the side of the manual utilizing apparatus 1. For example, the manual providing apparatus 2 or 2' may make the download folder include the original browsing index list 236 instead of the customized browsing index list. The manual providing apparatus 2 or 2' transmits this download folder to the manual utilizing apparatus 1, together with an agent for implementing the browsing list generation unit 2133 in the manual utilizing apparatus 1 (this can be realized by using Java (trademark), for example). Then, the browsing list generation unit 2133, which is implemented in the manual utilizing apparatus 1 when the CPU 11 of the manual utilizing apparatus 1 executes the above-mentioned agent, may generate a customized browsing index list, using the original browsing index list 236 and the download management table contained in the download folder received from the manual providing apparatus 2 or 2'.

Further, the above-described first and third embodiments take the example in which the download folder generated by the manual providing apparatus 2 or 2' is stored to the external storage 13 of the manual utilizing apparatus 1. However, the present invention is not limited to this. The download folder may be stored to another storage area that each manual utilizing apparatus 1 can access, such as a file server not shown. For example, a storage area for each manual utilizing apparatus 1 may be prepared in the manual providing apparatus 2 or 2', such that the download folder is stored to that storage area.

Further, the above-described first through fourth embodiments may generate a customized index table that allows indexing only for the download contents, similarly to generation of the customized browsing index list. Namely, there is prepared an original index table in which a plurality of keywords that have been set in advance are each associated with link information to a content stored in the content database. Then, a customized index table is generated by deleting link information to each content that is not selected as a download content, from the original index table. This customized index table is included in the download file. Further, the WWW browser or the HTML viewer is added with a function that enables indexing using the customized index table. By this, by inputting a keyword into a keyword entry prepared in a display screen by the WWW browser or the HTML viewer, a user can call and browse the download content associated with the keyword in question.

Further, the above-described first through fourth embodiments takes the example in which the manual documents are treated as the contents. However, the present invention is not limited to this, and can be widely applied to various data (for example, commodity catalog data, music data, and image data).

As described above, according to the present invention, downloaded contents can be efficiently browsed by downloading a part of contents stored in a WWW server or a storage medium. Further, it is possible to download only contents appropriate for the user's level or purpose, from a WWW server or a portable storage medium, to browse them.

## Claims

1. A content providing apparatus for providing contents in response to a request from a terminal connected through a network, comprising:
a list presentation means for presenting said terminal with a download index list describing respective indexes of a plurality of contents that said apparatus can provide;
a download instruction receiving means for receiving a download instruction that includes information of at least one index selected by a user of said terminal and included in said download index list, from said terminal;
a content obtaining means for obtaining download contents, i.e., contents corresponding to information of indexes included in said download instruction;
a browsing list generation means for generating a browsing index list describing the indexes of said download contents, with link information being set to said browsing index such that, by selecting indexes described in said list displayed, the user of said terminal can call and display download contents corresponding to said indexes; and
a content providing means for providing said download contents and said browsing index list to said terminal that has issued said download instruction.

2. The content providing apparatus according to Claim 1, further comprising:
a content database that stores the plurality of contents that said apparatus can provide;
wherein:
said content obtaining means searches said content database for the contents corresponding to the information of the indexes included in said download instruction, and obtains duplicates of said contents as the download contents.

3. The content providing apparatus according to Claim 1, further comprising:
a judgment means for judging if link information is set to the download content obtained by said content obtaining means, and for judging a link destination of said link information is selected as another download content, in a case where the link information is set; and
a dummy page generation means for generating a dummy page describing that a content of a link destination is not downloaded and for setting said dummy page as the link destination of link information set to said download content, in a case where said judgment means judges that said link destination of the link information set to the download content is not selected as another download content;
wherein:
said content providing means provides dummy pages, if any, which are generated by said dummy page generation means, said download contents, and said browsing index list, to said terminal that has issued the download instruction.

4. The content providing means according to Claim 3, wherein:
when said judgment means judges that a link destination of link information set to a download content is not selected as another download content, then, said dummy page generation means generate a dummy page to which link information is set such that the user of said content utilizing apparatus can call a content of said link destination through the network, and sets said dummy page as the link destination of the link information set to said download content.

5. The content providing apparatus according to Claim 1, further comprising:
a content management table storage means for storing a content management table describing an update date, a version and the like for each of the plurality of contents that said content providing apparatus can provide; and
a table generation means for obtaining management information of the contents corresponding to the information of the indexes included in said download instruction, to generate a download content management table describing the management information of said download content;
wherein:
said content providing means provides said download content management table, said download contents, and said browsing index list to said terminal that has issued the download instruction.

6. The content providing apparatus according to Claim 5, further comprising:
a list presentation request receiving means for receiving a list presentation request including information of said download content management table, from said terminal;
wherein:
when said list presentation means receives a list presentation request from said terminal through said list presentation request receiving means, then, said list presentation means compares the information of the download content management table, which is included in said list presentation request, with the information of the content management table stored in said content management table storage means, and generates a download index list of a display form that can identify contents that have not provided to said terminal, out of the plurality of contents that said content providing apparatus can provide, to present said download index list to said terminal;
said download instruction receiving means further receives an additional download instruction that includes information of at least one index selected by the user of said terminal and included in said download index list, from said terminal;
said content obtaining means obtains additional download contents, i.e., contents corresponding to information of indexes included in said additional download instruction;
said browsing list generation means newly generates a browsing index list that is a list describing the indexes of said additional download content and the indexes of the download contents described in the download content management table included in said list presentation request, with link information being set to the browsing index list such that, by selecting indexes described in said list displayed, the user of said terminal can call and display the download contents or the additional download contents corresponding to said indexes selected;
said table generation means obtains the management information of the contents corresponding to the information of the indexes included in said additional download instruction, adds said management information of the additional download contents to the download content management table included in the list presentation request, to newly generate a download content management table; and
said content providing means provides the newly-generated download content management table, the browsing index list, and said additional download contents, to said terminal that has issued the additional download instruction.

7. The content providing apparatus according to Claim 1, further comprising:
a judgment means for judging if link information is set to the download content obtained by said content obtaining means, and further judges if a link destination of said link information is selected as another download content, in a case where the link information is set;
wherein:
when said judgment means judges that a link destination of link information set to a download content is not selected as another download content, then, said content obtaining means sets the content of the link destination also as a download content.

8. The content providing apparatus according to Claim 1, wherein:
said contents are electronic data of an HTML (Hyper Text Markup Language) format.

9. A storage medium that stores a program for providing contents to a terminal connected through a network according to a request from said terminal, wherein said program implements following means in a computer, being read and executed by said computer, namely:
a list presentation means for presenting said terminal with a download index list describing respective indexes of a plurality of contents stored in a content database provided to said computer;
a download instruction receiving means for receiving a download instruction that includes information of at least one index selected by a user of said terminal and included in said download index list, from said terminal;
a content obtaining means for searching said content database for contents corresponding to information of indexes included in said download instruction, to obtain said contents as download contents;
a browsing list generation means for generating a browsing index list describing the indexes of said download contents, with link information being set to said browsing index such that, by selecting indexes described in said list displayed, the user of said terminal can call and display download contents corresponding to said indexes; and
a content providing means for providing said download contents and said browsing index list to said terminal that has issued said download instruction.

10. A method of providing contents to a terminal connected to a computer through a network, using said computer, and according to a request from said terminal, comprising steps of:
presenting said terminal with a download index list describing respective indexes of a plurality of contents that can be provided by said apparatus;
receiving a download instruction that includes information of at least one index selected by a user of said terminal and included in said download index list, from said terminal;
obtaining download contents, i.e., contents corresponding to information of indexes included in said download instruction;
generating a browsing index list describing the indexes of said download contents, with link information being set to said browsing index such that, by selecting indexes described in said list displayed, the user of said terminal can call and display download contents corresponding to said indexes; and
providing said download contents and said browsing index list to said terminal that has issued said download instruction.

11. A content utilizing apparatus for obtaining contents from a content database that stores a plurality of contents and a download index list describing respective indexes of said plurality of contents, comprising:
a download instruction receiving means for displaying the download index list stored in said content database, to receive a download instruction from a user, with said download instruction including at least one index of a content to be downloaded;
a content obtaining means for searching said content database for contents corresponding to information of indexes included in said download instruction, and for obtaining download contents, i.e., duplicates of said contents;
a browsing list generation means for generating a browsing index list describing the indexes of said download contents, with link information being set to said browsing index such that, by selecting indexes described in said list displayed, the user can call and display download contents corresponding to said indexes; and
a content storage means for storing said download contents and said browsing index list.

12. A storage medium that stores a program for obtaining contents from a content database storing a plurality of contents and a download index list describing respective indexes of said plurality of contents,
wherein said program implements following means in a computer, being read and executed by said computer, namely:
a download instruction receiving means for displaying the download index list, which is stored in said content database, on a display device provided to said computer, to receive a download instruction from a user, with said download instruction including at least one index of a content to be downloaded;
a content obtaining means for searching said content database for contents corresponding to information of indexes included in said download instruction, and for obtaining download contents, i.e., duplicates of said contents;
a browsing list generation means for generating a browsing index list describing the indexes of said download contents, with link information being set to said browsing index such that, by selecting indexes described in said list displayed, the user can call and display download contents corresponding to said indexes; and
a content storage means for storing said download contents and said browsing index list into a storage device.

13. A method of utilizing contents, in which contents are obtained, by using a computer, from a content database storing a plurality of contents and a download index list describing respective indexes of said plurality of contents, comprising steps of:
receiving a download instruction from a user by displaying the download index list, which is stored in said content database, on a display device provided to said computer, with said download instruction including at least one index of a content to be downloaded;
obtaining download contents, i.e., duplicates of contents corresponding to information of indexes included in said download instruction, by searching said content database for said contents;
generating a browsing index list describing the indexes of said download contents, with link information being set to said browsing index such that, by selecting indexes described in said list displayed, the user can call and display download contents corresponding to said indexes; and
storing said download contents and said browsing index list into a storage device.

14. A content providing apparatus for providing contents to a terminal connected through a network, according to a request from said terminal, comprising:
a content database that stores a plurality of contents;
a questioning and answering means for presenting predetermined questions to said terminal and receiving answers to said questions;
a model selection means for selecting at least one model out of a plurality of predetermined models, according to the answers received by said questioning and answering means;
a list acquiring means for acquiring a list of contents corresponding to said at least one model selected by said model selection means, from a management table that describes a list of contents to be downloaded for each model of said plurality of models;
a content obtaining means for searching said content database for the contents described in said list acquired by the list acquiring means, to obtain duplicates of said contents as download contents;
a browsing list generation means for generating a browsing index list describing the indexes of said download contents, with link information being set to said browsing index such that, by selecting indexes described in said list displayed, a user of said terminal can call and display download contents corresponding to said indexes; and
a content providing means for providing said download contents and said browsing index list to said terminal.

15. The content providing apparatus according to Claim 14, wherein:
said questions presented by said questioning and answering means to said terminal include a question about an age of the user of said terminal or a question about a font size; and
said content providing apparatus further comprises a font size deciding means for deciding a font size of said download contents provided by said content providing means, according to the questions received by said questioning and answering means.

16. The content providing apparatus according to Claim 15, wherein:
said contents stored in said content database are manual documents for said terminal or a peripheral device of said terminal;
said questions presented by said questioning and answering means to said terminal include a question about an intended purpose of said terminal or the peripheral device of said terminal; and
said model selection means includes a model corresponding to an intended purpose specified by an answer received by said questioning and answering means, among models of selection objects.

17. The content providing apparatus according to Claim 14, wherein:
said contents stored in said content database are manual documents for said terminal or a peripheral device of said terminal;
said questions presented by said questioning and answering means to said terminal include questions about a level of user's knowledge of said terminal or the peripheral device of said terminal; and
said model selection means includes a model corresponding to a level of the user of said terminal, among models of selection objects, with said level being specified by answers received by said questioning and answering means.

18. The content providing apparatus according to Claim 14, wherein:
said content database also stores data of a link destination of link information set to a content stored in said content database;
when link information is set to a download content obtained, said content obtaining means searches said content database for data of a link destination of said link information, to obtain a duplicate of said data of the link destination, in addition to said download contents; and
said content providing means provides also a duplicate of data of each link destination set in said download contents obtained by said content obtaining means, in addition to said download contents and said browsing index list, to said terminal.

19. The content providing apparatus according to Claim 18, further comprising:
a information receiving means for receiving information on a throughput of said terminal, with said information being transmitted from said terminal;
wherein:
said content database stores two kinds of data, i.e., motion picture data and still picture data, as data of a link destination of link information set to a content stored in said content database; and
when link information is set to a download content obtained,
said content obtaining means searches said content database for motion picture data of a link destination of said link information, to obtain a duplicate of said motion picture data of said link destination of said link information, in addition to said download contents, in a case where said throughput of said terminal, which is specified by the information received by said information receiving means, is more than or equal to a predetermined level; and
said content obtaining means searches said content database for still picture data of said link destination of said link information, to obtain a duplicate of said still picture data of said link destination, in addition to said download contents, in a case where said throughput of said terminal is less than the predetermined level.

20. A storage medium that stores a program for providing contents to a terminal connected through a network, according to a request from said terminal, wherein said program implements following means in a computer, being read and.executed by said computer, namely:
a questioning and answering means for presenting predetermined questions to said terminal and for receiving answers to said questions;
a model selection means for selecting at least one model out of a plurality of predetermined models, according to the answers received by said questioning and answering means;
a list acquiring means for acquiring a list of contents corresponding to said at least one model selected by said model selection means, from a management table that describes a list of contents to be downloaded for each model of said plurality of models;
a content obtaining means for searching a content database, which stores a plurality of contents, for the contents described in said list acquired by the list acquiring means, to obtain duplicates of said contents as download contents;
a browsing list generation means for generating a browsing index list describing the indexes of said download contents, with link information being set to said browsing index such that, by selecting indexes described in said list displayed, a user of said terminal can call and display download contents corresponding to said indexes; and
a content providing means for providing said download contents and said browsing index list to said terminal.

21. A method of providing contents, in which contents are provided, using a computer, to a terminal connected to said computer through a network, according to a request from said terminal, comprising steps of:
presenting predetermined questions to said terminal, and receiving answers to said questions;
selecting at least one model out of a plurality of predetermined models, according to the answers received;
acquiring a list of contents corresponding to said at least one model selected from a management table that describes a list of contents to be downloaded for each model of said plurality of models;
searching a content database, which stores a plurality of contents, for the contents described in said list acquired, to obtain duplicates of said contents as download contents;
generating a browsing index list describing the indexes of said download contents, with link information being set to said browsing index such that, by selecting indexes described in said list displayed, a user of said terminal can call and display download contents corresponding to said indexes; and
providing said download contents and said browsing index list to said terminal.

22. A content utilizing apparatus for obtaining contents from a content database storing a plurality of contents, comprising:
a questioning and answering means for presenting predetermined questions to a user and for receiving answers to said questions;
a model selection means for selecting at least one model out of a plurality of predetermined models, according to the answers received by said questioning and answering means;
a list acquiring means for acquiring a list of contents corresponding to said at least one model selected by said model selection means, from a management table that describes a list of contents to be downloaded for each model of said plurality of models;
a content obtaining means for searching said content database for the contents described in said list acquired by the list acquiring means, to obtain duplicates of said contents as download contents;
a browsing list generation means for generating a browsing index list describing the indexes of said download contents, with link information being set to said browsing index such that, by selecting indexes described in said list displayed, a user can call and display download contents corresponding to said indexes; and
a content storage means for storing said download contents and said browsing index list.

23. A storage medium that stores a program for obtaining contents from a content database that stores a plurality of contents, wherein said program implements following means in a computer, being read and executed by said computer, namely:
a questioning and answering means for presenting predetermined questions to a user through a display device connected to said computer and for receiving answers to said questions;
a model selection means for selecting at least one model out of a plurality of predetermined models, according to the answers received by said questioning and answering means;
a list acquiring means for acquiring a list of contents corresponding to said at least one model selected by said model selection means, from a management table that describes a list of contents to be downloaded for each model of said plurality of models;
a content obtaining means for searching said content database for the contents described in said list acquired by the list acquiring means, to obtain duplicates of said contents as download contents;
a browsing list generation means for generating a browsing index list describing the indexes of said download contents, with link information being set to said browsing index such that, by selecting indexes described in said list displayed, a user can call and display download contents corresponding to said indexes; and
a content storage means that stores said download contents and said browsing index list into a storage device.

24. A method of utilizing contents, in which contents are obtained, by using a computer, from a content database that stores a plurality of contents, comprising steps of:
presenting predetermined questions to a user, and receiving answers to said questions;
selecting at least one model out of a plurality of predetermined models, according to the answers received;
acquiring a list of contents corresponding to said at least one model selected from a management table that describes a list of contents to be downloaded for each model of said plurality of models;
searching said content database for the contents described in said list acquired, to obtain duplicates of said contents as download contents;
a browsing list generation means for generating a browsing index list describing the indexes of said download contents, with link information being set to said browsing index such that, by selecting indexes described in said list displayed, a user can call and display download contents corresponding to said indexes; and
storing said download contents and said browsing index list to a storage device.
